# EUROPEAN PATENT SPECIFICATION

(11) **EP 3 903 959 B1**
(45) Date of publication and mention of the grant of the patent: **05.11.2025**
(21) Application number: 20171861.6
(22) Date of filing: 28.04.2020
(51) Int. Cl.: B21F 27/12, B25J 11/00, E04C 5/06

(54) **PRIMARY BUILDING STRUCTURE FABRICATION SYSTEM**
SYSTEM ZUR HERSTELLUNG EINER PRIMÄREN GEBÄUDESTRUKTUR
SYSTÈME DE FABRICATION DE STRUCTURE DE BÂTIMENT PRINCIPAL

(43) Date of publication of application: 03.11.2021
(73) Proprietor: Mesh AG, 5242 Birr (CH)
(72) Inventor: MIRJAN, Ammar, 5415 Nussbaumen (CH); KOH, Mattis, 8004 Zurich (CH); GRAMAZIO, Fabio Matteo, 8005 Zurich (CH); KOHLER, Matthias, 8616 Riedikon (CH)
(74) Representative: Keller Schneider Patent- und Markenanwälte AG

(56) References cited:
- WO-A1-2017/153559
- US-A1- 2018 333 764
- US-B2- 10 094 114

## Description

### FIELD OF THE INVENTION

The present invention relates to a primary building structure fabrication system, and a method of fabricating a primary building structure.

### BACKGROUND OF THE INVENTION

Wire structures form an integral part of building construction techniques, where such wire structures are used as part of wall structures and can for example form part of reinforced concrete structures. The wire structures can only generally be made as flat structures. This inhibits the fabrication of complex 3-D building structures.

There is a need to address this issue.

WO 2017/153559 Al, US 2018/333764 Al and US 10 094 114 B2 D3 disclose examples of primary building structure fabrication systems of the state of the art.

### SUMMARY OF THE INVENTION

It would be advantageous to have improved means of providing at least a part of a wire structure to be used for fabricating a building structure.

The object of the present invention is solved with the subject matter of the independent claims 1 and 18, wherein further embodiments are incorporated in the dependent claims. It should be noted that the following described aspects and examples of the invention apply also to the building structure wire fixation system, and the method of fabricating a wire fixation building structure.

In a first aspect, there is provided a primary building structure fabrication system, comprising:
- a processing unit; and
- at least one manipulator.

The processing unit is configured to receive fabrication information. One or more manipulators are configured to fabricate a plurality of sections of a primary building structure. Each section comprises at least one strand. The at least one strand comprises one or more of wire, rod or band. The fabrication of the plurality of sections comprises utilization of the fabrication information.

In this manner fabrication information, for example 3-D construction data from a computational model, that could be derived from an architect or structural engineer, is used to generate a 3-D structure formed from sections, such as 2-D or 3-D sections, that in effect constitutes a skeletal based structure, here termed a primary building structure. This primary building structure, can then be formed into very complex shapes based on the fabrication information, that could not otherwise be built. The primary building structure, can then act as a reference structure to which is applied wire, rod or band, such as Rebar, that can be aligned and attached to the primary building structure to form a final building structure with structural robustness.

In other words, one or more strands, that can be wire, rod or band, and used to fabricate a section of a primary building structure in a new way.

A section is part of a primary building structure fabricated from one or more strands in the form of wire, rod or band, such as rebar. To explain further, a computational model of a final building structure, such as a wavy wall, can be generated by an architect or engineer. To build the wall, the primary structure that has a complex 3D shape matching the wavy wall computational model needs to be fabricated and placed or erected on a construction site at the correct location, and for example filled with concrete. To do this, slices through this computational model at different points along the building structure can be generated. Each slice can for example be essentially a flat plane with a complex outer shape. The primary building structure fabrication system then fabricates sections that match the slices through these points in the computational model. Then, when these sections are placed or aligned in relation to each other, from information in the computational model, they form the primary building structure that matches in reality the complex shape of the wavy wall in the computational model. The sections can then if necessary be attached to each other, or not, but they facilitate the construction of the real complex 3D structure, such as the exemplar wavy wall.

A manipulator of the at least one manipulator is configured to align one or more sections of the plurality of sections on a platform. The alignment comprises utilization of the fabrication information.

Thus, a manipulator of in effect a robotic system can fabricate a section, which could then be placed and aligned on a platform by that manipulator or a different manipulator. Indeed, the manipulator that fabricates the section can actually fabricate the section on the platform itself. The sections can then be detached from the platform, and be shipped to a construction site. The sections can then be again positioned and aligned with respect to each other, and this can entail them being fixed to a platform or to the floor or other structure. Then, a feed strand (190) in the form of feed wire or feed rod or feed band can be aligned and attached to the sections to form a finalized building structure.

In an example, the manipulator is configured to position a first section of the plurality of sections on the platform, and wherein the manipulator is configured to align the one or more sections relative to the first section.

A manipulator of the at least one manipulator is configured to fix the plurality of sections to the platform.

In an example, the manipulator is configured to fix the plurality of sections to the platform such that they can subsequently be released from the platform.

In an example, fixation of the plurality of sections to the platform by the manipulator comprises one or more of: gluing; clamping; tying; utilizing magnets; MIG/MAG welding; or contact welding.

In an example, the at least one strand of a section comprises a first strand and comprises a second strand. To fabricate the section the one or more manipulators are configured to fix one or more interconnecting strands to the first strand and to the second strand.

In an example, to fabricate a section the one or more manipulators are configured to bend the at least one strand of the section.

Thus, rather than fabricating a section from a number of individual strands, single strand can be bent into the shape of a required section. This can be done with a strand being fixed to a platform, where for example one part of a manipulator can hold one section of a strand, whilst another part of the manipulator holds another piece of the strand and the manipulator moves the two parts relative to each other to bend the strand. If necessary the finalized bent section can be positioned and aligned on a platform. However, the strand can be fixed to a platform and then bent into the required section shape. Or, the strand can be bent and then fixed to a platform and then further bent into the required section shape. All of this is carried out according to fabrication information, in order that individual sections have slice shapes as required to form an overall 3-D skeletal shape of the required form, that can exhibit complex curves et cetera. Also, more than one strand can be bent as part of fabricating the section.

In an example, the at least one strand of a section comprises a first strand and comprises a second strand. To fabricate the section the one or more manipulators are configured to bend the first strand and/or the one or more manipulators are configured to bend the second strand.

In an example, the at least one strand of a section comprises a first strand and comprises a second strand. To fabricate the section the one or more manipulators are configured to fix a first interconnecting strand to the first strand and fix the first interconnecting strand to the second strand. The one or more manipulators are configured to bend the first strand and/or bend the second strand. The one or more manipulators are configured to fix a second interconnecting strand to the first strand and fix the second interconnecting strand to the second strand. This is done such that a section (or segment) of the first strand between the first interconnecting strand and the second interconnecting strand and/or a section (or segment) of the second strand between the first interconnecting strand and the second interconnecting strand is bent. The bending and fixing comprises utilization of the fabrication information.

In an example, the system comprises a stabilization platform. To fabricate a section the one or more manipulators are configured to bend the at least one strand of the section whilst at least a part of the at least one strand is in contact with the stabilization platform such that the section conforms to a surface plane of the stabilization platform.

In other words, one or more wires/rods/bands can be bent into a required shape of a section, whilst they abut against a stabilization platform. Thus, for example wires can be bent whilst they are lying on a horizontal table or wires that are initially aligned vertically can be bent when a vertical plate is positioned against them. In this way, the wires can be better formed into the correct shape, because there is a movement degree of freedom constrained by the stabilization platform.

In an example, the at least one strand of a section comprises a first strand and comprises a second strand. After the one or more manipulators have bent the first strand and/or bent the second strand, the one or more manipulators are configured to align the first strand relative to the second strand. The alignment comprises a movement and/or a further bending of the first strand and/or the alignment comprises a movement and/or a further bending of the second strand. The alignment comprises utilization of the fabrication information.

In an example, the alignment comprises an alignment of a plurality of segments of the first strand relative to a plurality of segments of the second strand, and after a segment of the first strand is aligned relative to a segment of the second strand, the segment of the first strand is fixed to the segment of the second strand with an interconnecting strand.

In an example, the one or more manipulators are configured to fix the interconnecting strand to the segment of the first strand and to the segment of the second strand.

In an example, the at least one strand of a section comprises a first strand and comprises a second strand. The one or more manipulators are configured to bend the first strand and/or bend the second strand whilst an end of the first strand is fixed relative to an end of the second strand.

In an example, the manipulator is configured to fix a part of one strand to a part of another strand and/or fix one part of strand to another part of the same strand. The fixation can comprise: tying; MIG/MAG welding; or contact welding.

In other words, the bent strand can be welded together for example by a human who welds the strand parts together where they meet or closely aligned after the bending, however the manipulator itself can as it bends the strand also fix parts of the strand together where they come close one to the other, for example through welding.

Thus, the manipulator is provided with the required parts to weld metal parts together, and indeed the manipulator can also comprise means to clamp metal parts together in order to provide effective contact welding.

In an example, the one or more sections are fabricated and aligned on the platform such that at least one part of the at least one strand for each section of the one or more sections is located at or near a corresponding at least one of a plurality of intersection points defined within the fabrication information.

In an example, the at least one of the plurality of intersection points defined within the fabrication information is useable for the alignment and/or attachment of a feed strand to the primary building structure formed from the plurality of sections.

In a second aspect, there is provided a wire section fabrication manipulator. The manipulator is configured to be controlled to fabricate a section of a primary building structure out of at least one strand. The at least one strand comprises one or more of wire, rod or band. The control comprises utilization of fabrication information.

In an example, the manipulator is configured to bend the at least one strand of the section.

In an example, the manipulator comprises a first strand interactor and a second strand interactor. The first strand interactor is configured to support, hold or grasp a first strand of the at least one strand of the section and the second strand interactor is configured to support, hold or grasp a second strand of the at least one strand of the section. The first strand interactor is configured to move relative to the second strand interactor on the basis of the fabrication information.

In this way, the first strand can be spatially aligned, and the second strand can be spatially aligned, where the two strands can be aligned with respect to each other, and one or both of the strands can be bent.

In an example, the first strand interactor comprises a first part and a second part and the second strand interactor comprises a first part and a second part. The first part of the first stand interactor is configured to contact a first side of the first strand and the second part of the first stand interactor is configured to contact a second side of the first strand opposite to the first side. The first part of the second stand interactor is configured to contact a first side of the second strand and the second part of the second stand interactor is configured to contact a second side of the second strand opposite to the first side.

In this manner, the first strand and the second strand can be moved and bent away from each other and moved and bent towards each other, and this be performed at different points along the length of the strands to generate a complex shaped section.

In a third aspect, there is provided a wire section alignment manipulator. The manipulator is configured to be controlled to align one or more sections of a plurality of sections of a primary building structure on a platform. Each section comprises at least one strand. The at least one strand comprises one or more of wire, rod or band. The control comprises utilization of fabrication information.

In an example, the manipulator is configured to be controlled to position a first section of the plurality of sections on the platform, and the manipulator is configured to align the one or more sections relative to the first section.

In an example, the manipulator is configured to be controlled to fix the plurality of sections to the platform.

In an fourth aspect, there is provided a method of fabricating a primary building structure, the method comprising the features of claim 18.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Figs. 1a-1e show a representation from one figure to the next of a manipulator of a primary building structure fabrication system fabricating a section of a primary building structure, where two wires that are fixed to a platform are progressively bent and aligned into a required shape with interconnecting wires being fixed between the two wires.
   It is to be noted that a single strand of wire, rod or band can be bent into a section, and where that wire need not first be fixed to a platform but can be bent into a required shape of section when not attached to a platform.
Fig. 2 shows an example of a primary building structure made fabricated from wire by at least one manipulator of a primary building structure fabrication system, with two lines of feed wire at the bottom that have been aligned and attached to the primary building structure using a feed manipulator of the primary building structure fabrication system;
Fig. 3 shows an example of a primary building structure made fabricated from wire by at least one manipulator of a primary building structure fabrication system, with a series of lines of feed wire that have been aligned and attached to the primary building structure using a feed manipulator of the primary building structure fabrication system;

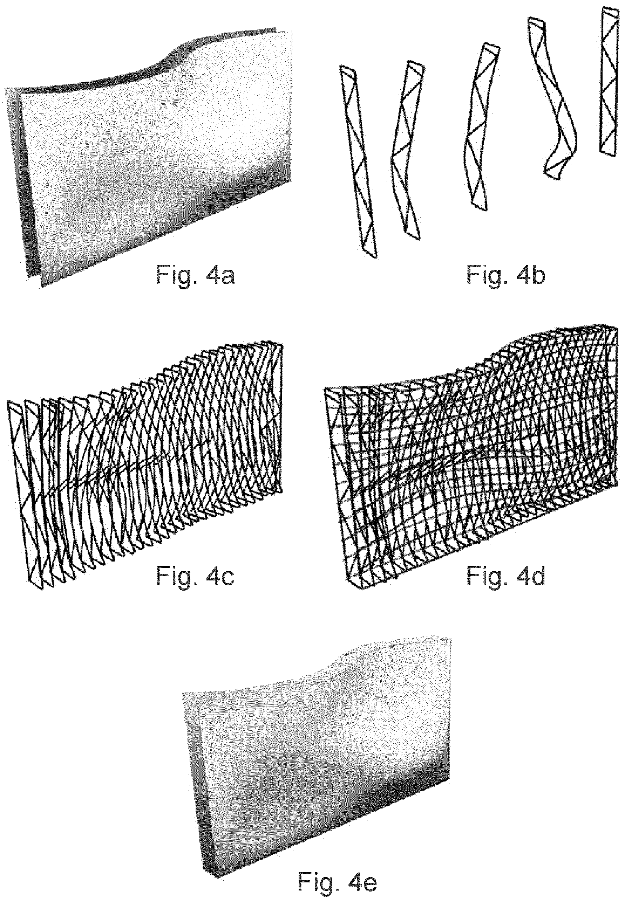

Figs. 4a-4e show an example of a complex shaped wall constructed using sections fabricated forming a primary building structure fabricated by a primary building structure fabrication system. Fig 4a: represents a computational 3D model of a complex shaped wall, generated by an architect or structural engineer, that constitutes fabrication information that can be used in fabricating the sections shown in Figs. 4b and 4c. Fig 4b: showing for reasons of visibility only five sections of the primary building structure. Fig 4c: shows an example of a complete number of sections, that could if necessary be attached one to the other by feed wire/rod/band. Fig 4d: shows an example of a final structure with complete number of sections and attached feed wire. Fig 4e: shows an example of a final complex shaped wall, filled, for example, with concrete;
Fig. 5 shows an example of a section of a primary building structure that has been fabricated by at least one manipulator of a primary building structure fabrication system where a wire has been bent into a required shape and fixed to itself at a number of touching positions, with an expanded portion of the top part shown at "A";
Fig. 6 shows an example of a primary building structure fabricated from wire by at least one manipulator of a primary building structure fabrication system, with a series of lines of feed wire at the back and one line of feed wire at the front, where the feed wire has been aligned and attached to the primary building structure using a feed manipulator of the primary building structure fabrication system;
Fig. 7 shows an example of a first strand of a section and a second strand of a section, that have been pre-bent by a manipulator, where the strands are lying on a stabilisation platform in the form of a table;
Fig. 8 follows on from fig. 7 and shows an example of a manipulator using fabrication information to align the two strands with respect to each other and align the two strands into a correct section shape, and where interconnecting strands are being fixed between two strands;
Fig. 9 follows on from Fig. 8 and shows the manipulator continuing to correct the alignment of the strands of the section prior to fixation of interconnecting strands between the two strands;
Fig. 10 shows an example of a manipulator;
Fig. 11 shows an example of a manipulator aligning and attaching a feed strand to a primary building structure formed from a number of sections;
Fig. 12 shows an example of a primary building structure formed from a number of sections to which two lines of feed strand have been attached by a manipulator; and
Fig. 13 shows a method of fabricating a primary building structure.

### DETAILED DESCRIPTION OF EMBODIMENTS

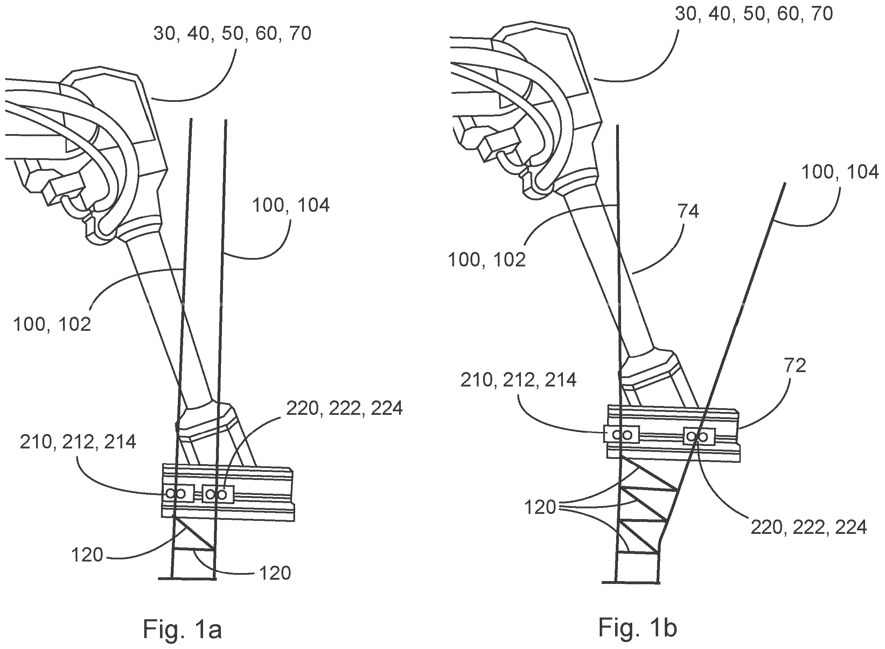

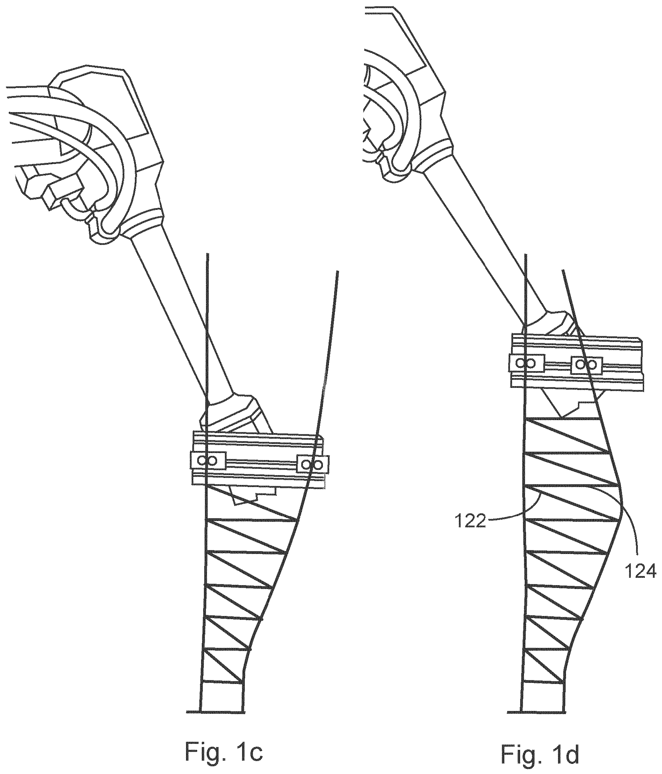

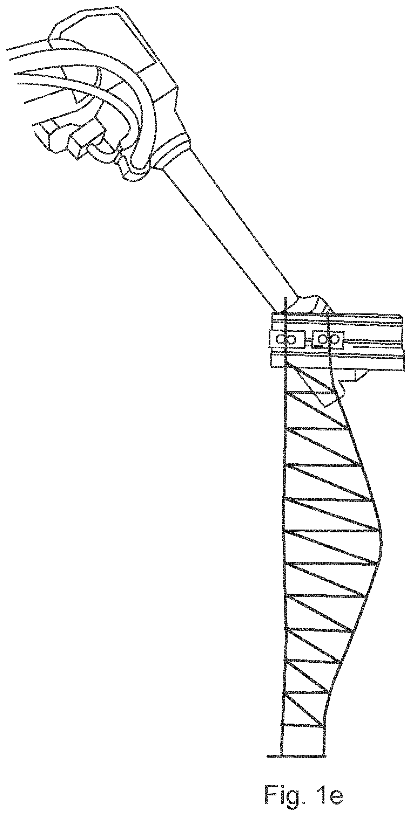

Figs. 1-13 relate to a primary building structure fabrication system, manipulators used in the fabrication, and a method of fabricating a primary building structure.

The primary building structure fabrication system comprises a processing unit 20, and at least one manipulator 30, 40, 50, 60, 70. The processing unit is configured to receive fabrication information. One or more manipulators 30, 40, 50, 60, 70 are configured to fabricate a plurality of sections 80 of a primary building structure 90. It is to be noted that just one manipulator can fabricate the sections, or a number of manipulators can work together to fabricate the sections. Each section comprises at least one strand 100. The at least one strand comprises one or more of wire, rod or band. The fabrication of the plurality of sections comprises utilization of the fabrication information.

In an example, a section can be fabricated from a single strand, such as a wire that is bent into a required shape.

In an example a single strand that is bent into a section, can be fixed to itself for example through welding.

In an example a first manipulator bends the single strand into the section shape, and a second manipulator fixes the strand to itself, for example via welding.

In an example, a single manipulator bends a single strand into the required section shape, and also fixes parts of the strand to itself.

In an example, a section can be formed from a first strand and a second strand, with interconnecting strands between them.

In an example, the one or more manipulators that fabricate a section comprises a first manipulator that bends a first strand and/or bends a second strand and comprises a second manipulator 40 that fixes interconnecting strands 120 between the first strand and the second strand.

Thus, a robot system can have a manipulator such as a stirrup bender that bends wires, and then a second manipulator, that can for example comprise a contact welding head can weld interconnecting wires between the bent wires.

In an example, a single manipulator can fabricate a section where this manipulator bends a first strand and/or bends a second strand and this manipulator also fixes interconnecting strands 120 between the first strand and the second strand, through the manipulator having for example a contact welding head portion.

In an example, wire of the primary building structure is metal. In an example, rod of the primary building structure is metal. In an example, band of the primary building structure is metal.

In an example, wire of the primary building structure is steel. In an example, rod of the primary building structure is steel. In an example, band of the primary building structure is steel.

In an example, wire of the primary building structure is a natural fibre, such as rattan. In an example, rod of the primary building structure is a natural fibre, such as rattan. In an example, band of the primary building structure is a natural fibre, such as rattan.

In an example, wire of the primary building structure is a synthetic material. In an example, rod of the primary building structure is a synthetic material. In an example, band of the primary building structure is a synthetic material.

In an example, wire of the primary building structure is carbon fibre. In an example, rod of the primary building structure is carbon fibre. In an example, band of the primary building structure is carbon fibre.

In an example, wire of the primary building structure has a circular cross-section. In an example, rod of the primary building structure has a circular cross-section.

In an example, wire of the primary building structure has a non-circular cross-section. In an example, rod of the primary building structure has a non-circular cross-section. In an example, band of the primary building structure has a non-circular cross-section.

In an example, the strand is rebar.

Thus, the strand that can be wire, rod, or band can be considered to be a linear, feed stock material, with different cross section possibilities, that can be plastically deformed.

In an example, one or more of the plurality of sections comprises a 2D slice. In other words the at least one strand is formed into a plane that is in effect a flat and not curved.

In an example, one or more of the plurality of sections comprises a 3D slice. In other words the at least one strand is formed into a shape that is not flat, and can for example have a shape that is in effect a curved plane.

According to an example, a manipulator 30, 50, 70 of the at least one manipulator is configured to align one or more sections 82 of the plurality of sections on a platform 110. The alignment comprises utilization of the fabrication information.

In an example, the manipulator that aligns each section on the platform is the same as the manipulator or one of the manipulators that fabricates the plurality of sections.

In an example, the manipulator 50 that aligns each section on the platform is different to the manipulator or one or more the manipulators 30, 40, 70 that fabricates the plurality of sections.

In an example, the one or more sections of the plurality of sections are aligned on the platform spaced one from the other.

In an example, the one or more sections are the plurality of sections.

In an example, the plurality of sections are configured to be fixed to the platform by one or more of: gluing; clamping; tying; utilizing magnets; MIG/MAG welding; or contact welding.

According to an example, the manipulator 30, 50, 70 is configured to position a first section 84 of the plurality of sections on the platform, and the manipulator is configured to align the one or more sections 82 relative to the first section.

In an example, the one or more sections are all the plurality of sections except for the first section.

In an example, the positioning of the first section on the platform comprises utilization of the fabrication information.

According to an example, a manipulator 30, 50, 60, 70 of the at least one manipulator is configured to fix the plurality of sections to the platform.

In an example, the manipulator that aligns each section on the platform is the same as the manipulator that fixes each section to the platform.

In an example, the manipulator that aligns each section on the platform is different to the manipulator 60 that fixes each section to the platform.

In an example, the manipulator that fixes each section to the platform is the same as the manipulator or one of the manipulators that fabricates the plurality of sections.

In an example, the one or more sections of the plurality of sections fixed to the platform are spaced one from the other.

According to an example, the manipulator 30, 50, 60, 70 is configured to fix the plurality of sections to the platform such that they can subsequently be released from the platform.

According to an example, fixation of the plurality of sections to the platform by the manipulator 30, 50, 60, 70 comprises one or more of: gluing; clamping; tying; utilizing magnets; MIG/MAG welding; or contact welding.

According to an example, the at least one strand of a section comprises a first strand 102 and comprises a second strand 104. To fabricate the section the one or more manipulators 30, 40, 70 are configured to fix one or more interconnecting strands 120 to the first strand and to the second strand.

In an example, an end of the first strand is fixed to the platform and an end of the second strand is fixed to the platform.

In an example, the one or more manipulators 30, 40, 70 are configured to fix the first strand to the platform and fix the second strand to the platform.

In other words, one strand is attached to the platform and a second strand is attached to the platform, and one or more further strands are attached between the two strands that are attached to the platform.

In an example, the first strand, the second strand, and the one or more interconnecting strands are all wire, or rod or band.

According to an example, to fabricate a section the one or more manipulators 30, 40, 70 are configured to bend the at least one strand of the section.

In an example, a strand can be bent to form a section such that numerous parts of the strand are closely aligned with other numerous parts of the strand, each of which can then be fixed one to the other if required.

In an example, a manipulator configured to bend the strand to form a section comprises a stirrup bender

According to an example, the at least one strand of a section comprises a first strand 102 and comprises a second strand 104. To fabricate the section the one or more manipulators 30, 40, 70 are configured to bend the first strand and/or the one or more manipulators are configured to bend the second strand.

According to an example, the at least one strand of a section comprises a first strand 102 and comprises a second strand 104. To fabricate the section the one or more manipulators 30, 40, 70 are configured to fix a first interconnecting strand 122 to the first strand and fix the first interconnecting strand to the second strand. The one or more manipulators 30, 40, 70 are configured to bend the first strand and/or bend the second strand. The one or more manipulators 30, 40, 70 are configured to fix a second interconnecting strand 124 to the first strand and fix the second interconnecting strand to the second strand, such that a section of the first strand between the first interconnecting strand and the second interconnecting strand and/or a section of the second strand between the first interconnecting strand and the second interconnecting strand is bent. The bending and fixing comprises utilization of the fabrication information.

According to an example, the system comprises a stabilization platform 130. To fabricate a section the one or more manipulators 30, 40, 70 are configured to bend the at least one strand of the section whilst at least a part of the at least one strand is in contact with the stabilization platform such that the section conforms to a surface plane of the stabilization platform.

In an example, the stabilization platform is horizontally orientated, and can for example be a table.

In an example, the stabilization platform is vertically orientated.

According to an example, the at least one strand of a section comprises a first strand 102 and comprises a second strand 104. After the one or more manipulators 30, 40, 70 have bent the first strand and/or bent the second strand, the one or more manipulators are configured to align the first strand relative to the second strand. The alignment comprises a movement and/or a further bending of the first strand and/or the alignment comprises a movement and/or a further bending of the second strand. The alignment comprises utilization of the fabrication information.

According to an example, the alignment comprises an alignment of a plurality of segments of the first strand relative to a plurality of segments of the second strand. After a segment of the first strand is aligned relative to a segment of the second strand, the segment of the first strand is fixed to the segment of the second strand with an interconnecting strand 120.

According to an example, the one or more manipulators 30, 40, 70 are configured to fix the interconnecting strand to the segment of the first strand and to the segment of the second strand.

According to an example, the at least one strand of a section comprises a first strand and comprises a second strand, and wherein the one or more manipulators 30, 40, 70 are configured to bend the first strand and/or bend the second strand whilst an end of the first strand is fixed relative to an end of the second strand.

In an example, the end of the first strand is fixed to the stabilization platform and the end of the second strand is fixed to the stabilization platform.

In an example, the manipulator is configured to fix the end of the first strand to the stabilization platform and fix the end of the second strand to the stabilization platform.

In an example, a specific manipulator 40 is configured to fix interconnecting strands between the first strand and second strand, for example by welding or wire tying, and a separate manipulator 30, 70 is configured to bend the strands.

In an example, a single manipulator can bend the first and second strands and fix interconnecting strands between these strands.

In an example, a manipulator is configured to bend the first and second strands to the correct section shape, and either during the bending process or after the strands have been bent, a human operative can fix interconnecting strands between the fist strand and second strand, for example by welding or tying.

According to an example, the manipulator is configured to fix a part of one strand to a part of another strand and/or fix one part of strand to another part of the same strand, wherein the fixation comprises: tying; MIG/MAG welding; or contact welding.

In an example, the manipulator comprises a transformer, and a cathode system and an anode system.

According to an example, the one or more sections are fabricated and aligned on the platform such that at least one part of the at least one strand for each section of the one or more sections is located at or near a corresponding at least one of a plurality of intersection points defined within the fabrication information.

According to an example, the at least one of the plurality of intersection points defined within the fabrication information is useable for the alignment and/or attachment of a feed strand 190 to the primary building structure formed from the plurality of sections.

In an example, the feed strand 190 is a feed wire, feed rod or feed band.

In this way, the sections are formed into complex shapes, with the sections then are aligned one or the other to form an overall complex 3-D shape, where parts of each section form a matrix of points relating one to the other, and where this matrix of points are usable by the robotic system or another robotic system to align and indeed attach a feed wire feed rod or feed band to the structure, through for example bending and welding of the feed wire/rod/band to the structure formed by the sections at these matrix of points - here termed intersection points.

In an example, a feed manipulator 70 of the at least one manipulator is configured to align the feed strand 190 that is one of feed wire or feed rod or feed band to the primary building structure at the plurality of intersection points. The alignment of the feed wire or feed rod or feed band to the primary building structure at the plurality of intersection points comprises utilization of the fabrication information.

In this manner, complex three-dimensional wire structures can be fabricated from for example wire in the form of Rebar.

By utilising fabrication information, such as three-dimensional structure data (that can be a series of intersection point in space) of where the feed wire (or rod or band) is to be fixed in space, the system can then fabricate a primary wire structure to be accurately or loosely aligned to this mathematically defined structure and then align the feed wire or feed rod or feed band to this mathematically defined structure, involving a movement of parts of the primary wire structure if necessary. The underlying primary building structure can also therefore be defined precisely to this mathematically defined structure such that the aligned feed wire or feed rod or feed band also aligns with the primary building structure as fabricated. However, the primary building structure can be positioned with a certain degree of flexibility of wires, rods or bands forming the primary building structure, and need not then be precisely aligned to the intersection as defined by the fabrication information. Then, the feed wire or feed rod or feed band can be accurately aligned to intersection points, which in some cases could be immediately adjacent to the primary building structure or in other cases the primary building structure could be somewhat spaced from the aligned feed wire or feed rod or feed band. Then, the primary building structure at that location could be deformed or bent or moved slightly to align itself with the accurately aligned feed wire or feed rod or feed band , thereby enabling an overall accurate three-dimensional building wire structure to be fabricated.

In an example, the feed manipulator is a manipulator of the one or more manipulators that fabricate sections.

In an example, the feed wire is metal. In an example, the feed rod is metal. In an example, the feed band is metal.

In an example, the feed wire is steel. In an example, the feed rod is steel. In an example, the feed band is steel.

In an example, wire of the primary building structure is a natural fibre, such as rattan. In an example, rod of the primary building structure is a natural fibre, such as rattan. In an example, band of the primary building structure is a natural fibre, such as rattan.

In an example, wire of the primary building structure is a synthetic material. In an example, rod of the primary building structure is a synthetic material. In an example, band of the primary building structure is a synthetic material.

In an example, the feed wire is carbon fibre. In an example, the feed rod is carbon fibre. In an example, the feed band is carbon fibre.

In an example, the feed wire has a circular cross-section. In an example, the feed rod has a circular cross-section.

In an example, the feed wire has a non-circular cross-section. In an example, the feed rod has a non-circular cross-section. In an example, the feed band has a non-circular cross-section.

Thus the system can operate with feed stock that is wire, rod or band that is metal or bendable carbon fibre for example, and where this stock can be round or other shapes, such as a band. Similarly, the primary building structure to which the feed stock is aligned and if necessary attached, can be from wire, rod or band that is metal or bendable carbon fibre.

In an example, the feed manipulator 70 comprises a roller 140 configured to engage with and roll along the feed wire or feed rod or feed band.

In an example, the feed manipulator comprises a conduit section 150 through which the feed wire or feed rod or feed band is configured to run.

In an example, the roller and conduit section are part of a head portion 72 of the feed manipulator.

In an example, the feed manipulator comprises a transformer 160.

In an example, the feed manipulator comprises a cathode system 170.

In an example, the feed manipulator comprises an anode system 180.

In an example, the roller also forms part of the anode system and can be positively charged.

In an example, a positive anode cable 172 goes from the transformer to the roller.

In an example, a negative cathode copper plate 240 forms part of the cathode system and is arranged adjacent to the roller.

In an example, a negative cathode cable 174 goes from the transformer to the negative copper plate.

In an example, the transformer, cathode system and anode system are configured to weld one strand to another strand.

In an example, the head portion of the feed manipulator is configured to rotate with respect to a body portion 74 of the feed manipulator.

In an example, alignment of the feed wire or feed rod or feed band to the primary building structure comprises a translation of the feed manipulator with respect to the primary building structure.

In an example, alignment of the feed wire or feed rod or feed band to the primary building structure comprises a rotation of the head portion of the feed manipulator with respect to the primary building structure.

In an example, the feed manipulator is also configured to fabricate sections of the primary building structure.

In an example, the feed manipulator is configured to align the feed wire or feed rod or feed band to the primary building structure at a first intersection point of a pair of adjacent intersection points and then align the feed wire or feed rod or feed band to the primary building structure at a second intersection point of the pair of adjacent intersection points.

In other words, the feed manipulator of the system progresses along the primary building structure, aligning the feed wire or feed rod or feed band to the intersection points on the basis of the fabrication information as it moves.

In an example, the feed manipulator is configured to bend the feed wire or feed rod or feed band, and wherein alignment of the feed wire or feed rod or feed band to the primary building structure at the plurality of intersection points comprises a bending of the feed wire or feed rod or feed band between at least one pair of adjacent intersection points.

In an example, bending of the feed wire or feed rod or feed band comprises a translational movement of the feed manipulator.

In an example, bending of the feed wire or feed rod or feed band comprises a rotation of the head portion of the feed manipulator with respect to the body portion of the feed manipulator.

In an example, the feed manipulator is configured to attach the feed wire or feed rod or feed band to the primary building structure at the plurality of intersection points.

Thus, not only can the system fabricate a complex structure from sections it can then align wire such as Rebar to the complex structure, where a human could then attach the wire/rod/band to the complex structure, but now the feed manipulator of the system itself can attach the wire/rod/band to the complex structure itself. In other words, a three dimensional structure is built according to fabrication information where this structure is formed from a series of sections that are fixed to a platform. Then, this structure is made rigid by attaching feed wire, feed rod or feed band to the structure, for example in horizontal lines up the structure, to make the structure structurally sound.

In an example, attachment of the feed wire or feed rod or feed band to the primary building structure comprises a translation of the feed manipulator with respect to the primary building structure.

In an example, attachment of the feed wire or feed rod or feed band to the primary building structure comprises a rotation of the head portion of the feed manipulator with respect to the primary building structure.

In an example, attachment of the feed wire or feed rod or feed band to the primary building structure at the plurality of intersection points comprises utilization of the fabrication information.

In an example, the feed manipulator is configured to attach the feed wire or feed rod or feed band to the primary building structure at a first intersection point of a pair of adjacent intersection points and then attach the feed wire or feed rod or feed band to the primary building structure at a second intersection point of the pair of adjacent intersection points.

In an example, attachment of the feed wire or feed rod or feed band to the primary building structure at the plurality of intersection points comprises a bending of the feed wire or feed rod or feed band between at least one pair of adjacent intersection points.

In this way, the feed manipulator of the system can progress along the primary building structure, bending and aligning the feed wire/rod/band to the intersection points on the basis of the fabrication information as it moves.

In an example, the feed manipulator is configured to attach the feed wire or feed rod or feed band to the primary building structure at a first intersection point of a pair of adjacent intersection points and then bend the feed wire or feed rod or feed band between the pair of adjacent intersection points and then attach the feed wire or feed rod or feed band to the primary building structure at a second intersection point of the pair of adjacent intersection points.

Thus, the feed manipulator can bend the feed wire/rod/band with a feed wire/rod/band that is not attached to any portion of the primary building (wire/rod/band) structure, but as the manipulator bends and aligns the feed wire/rod/band it can also attach the feed wire/rod/band to the primary building structure at intersection points, which speeds up fabrication and can in certain situations aid in bending of the feed wire/rod/band.

In an example, the feed manipulator is configured to move at least one wire or rod or band segment of the primary building structure, and wherein attachment of the feed wire or feed rod or feed band to the primary building structure at the plurality of intersection points comprises a movement of the at least one wire or rod or band segment of the primary building structure.

In other words, the primary (wire/rod/band) building structure does not need to be accurately aligned with the intersection points, but the feed manipulator can align the feed wire/rod/band to a correct point in space aligned with an intersection point and if the associated part of the primary wire/rod/band structure to which the feed wire/rod/band is to be attached is not immediately adjacent to the aligned feed wire/rod/band, the feed manipulator can grasp a segment of the primary wire/rod/band structure and pull it towards the feed manipulator and towards the correct intersection point where it is then attached to the bent and aligned feed wire/rod/band, thereby providing the accurately fabricated three-dimensional structure according to the fabrication information.

In an example, the feed manipulator is configured to move the at least one wire or rod or band segment of the primary building structure such that a part of the at least one wire or rod or band segment is positioned at a corresponding at least one intersection point, such that the feed is attached to the at least one wire or rod or band segment at the at least one intersection point.

In an example, attachment of the feed to the primary building structure at the plurality of intersection points comprises: tying; MIG/MAG welding; or contact welding.

In an example, the feed manipulator comprises a transformer 160, and a cathode system 170 and an anode system (180).

In an example, the roller can form part of the anode system, and a cathode can be situated adjacent to the roller.

In an example, the feed manipulator comprises a clamp configured to clamp a wire or rod or band segment of the primary building structure to the feed wire or feed rod or feed band at or in the vicinity of an associated intersection point.

In this manner, the correct clamping force for contact welding can be ensured.

In an example, the system comprises at least one sensor device 200 configured to determine manipulator information, wherein the manipulator information comprises one or more of: a location of the feed manipulator relative to at least one intersection point; a distance between the feed manipulator and at least one part of the primary building structure; a distance between the feed manipulator and at least one intersection point; a determined contact between the feed manipulator and at least one part of the primary building structure; a contact force between the feed manipulator and at least one part of the primary building structure; a torque being applied to the feed manipulator, and wherein the alignment of the feed to the primary building structure at the plurality of intersection points comprises utilization of the manipulator information.

In this way, the feed manipulator can align and bend feed wire/rod/band to an intersection point based on for example 3-D data of the fabrication information, such as from a computational model, with this alignment can be refined if necessary by additional sensor data. Such sensor data can provide for increased accuracy and precision.

The sensor data can also be used to ensure that the feed manipulator does not unintentionally contact the primary building (wire/rod/band) structure and damage itself.

**In** an example, the system comprises at least one sensor device configured to determine manipulator information, wherein the manipulator information comprises one or more of: a location of the feed manipulator relative to at least one intersection point; a distance between the feed manipulator and at least one part of the primary building structure; a distance between the feed manipulator and at least one intersection point; a determined contact between the feed manipulator and at least one part of the primary building structure; a contact force between the feed manipulator and at least one part of the primary building structure; a torque being applied to the feed manipulator; and wherein the attachment of the feed wire to the primary building structure at the plurality of intersection points comprises utilization of the manipulator information.

A wire section fabrication manipulator 30, 40, 70 is therefore configured to be controlled to fabricate a section 80, 82, 84 of a primary building structure 90 out of at least one strand 100. The at least one strand comprises one or more of wire, rod or band; and wherein the control comprises utilization of fabrication information.

**In** an example, the manipulator is configured to be controlled to fabricate a plurality of sections of the primary building structure and configured to be controlled to align one or more sections 82 of the plurality of sections 80 on a platform 110. Each section comprises at least one strand 100. The alignment control comprises utilization of fabrication information.

**In** an example, the manipulator is configured to be controlled to position a first section 84 of the plurality of sections on the platform, and wherein the manipulator is configured to align the one or more sections 82 relative to the first section.

In an example, the manipulator is configured to be controlled to fix the plurality of sections to the platform.

According to an example, the manipulator is configured to bend the at least one strand of the section.

According to an example, the manipulator comprises a first strand interactor 210 and a second strand interactor 220. The first strand interactor is configured to support, hold or grasp a first strand 102 of the at least one strand of the section and the second strand interactor is configured to support, hold or grasp a second strand 104 of the at least one strand of the section. The first strand interactor is configured to move relative to the second strand interactor on the basis of the fabrication information.

According to an example, the first strand interactor 210 comprises a first part 212 and a second part 214 and the second strand interactor comprises a first part 222 and a second part 224. The first part of the first stand interactor is configured to contact a first side of the first strand and the second part of the first stand interactor is configured to contact a second side of the first strand opposite to the first side. The first part of the second stand interactor is configured to contact a first side of the second strand and the second part of the second stand interactor is configured to contact a second side of the second strand opposite to the first side.

A wire section alignment manipulator 30, 50, 70 can therefore be configured to be controlled to align one or more sections 82 of a plurality of sections 80 of a primary building structure 90 on a platform 110. Each section comprises at least one strand 100. The at least one strand comprises one or more of wire, rod or band; and wherein the control comprises utilization of fabrication information.

According to an example, the manipulator is configured to be controlled to position a first section 84 of the plurality of sections on the platform, and the manipulator is configured to align the one or more sections 82 relative to the first section.

According to an example, the manipulator is configured to be controlled to fix the plurality of sections to the platform.

In an example, the manipulator is configured to fix the plurality of sections to the platform such that they can subsequently be released from the platform.

In an example, fixation of the plurality of sections to the platform by the manipulator comprises one or more of: gluing; clamping; tying; utilizing magnets; MIG/MAG welding; or contact welding.

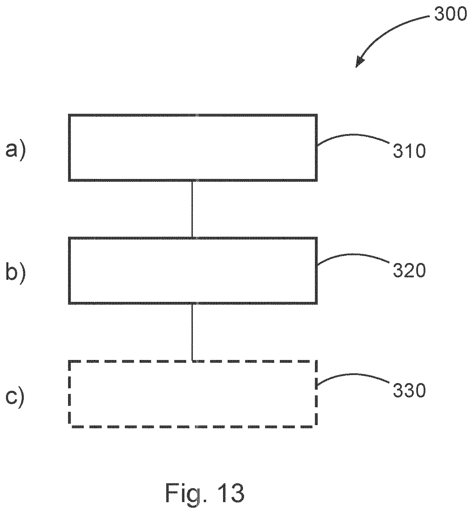

Fig. 13 shows a method 300 of fabricating a primary building structure in its basic steps where essential steps are shown in bold lines and optional steps are shown in dashed lines. The method comprises:
in a receiving step 310, also referred to as step a), receiving by a processing unit fabrication information; and
in a fabricating step 320, also referred to as step b), fabricating with one or more manipulators of at least one manipulator a plurality of sections of a primary building structure;
wherein, each section comprises at least one strand;
wherein, the at least one strand comprises one or more of wire, rod or band; and
wherein, the fabricating the plurality of sections comprises utilizing the fabrication information.

In an example, the method comprises step c) aligning 330 with a manipulator of the at least one manipulator one or more sections of the plurality of sections on a platform, and wherein the aligning comprises utilizing the fabrication information.

In an example, the manipulator that aligns each section on the platform is the same as the manipulator that fabricates the plurality of sections.

In an example, the manipulator that aligns each section on the platform is different to the manipulator that fabricates the plurality of sections.

In an example, the one or more sections of the plurality of sections are aligned on the platform spaced one from the other.

In an example, the one or more sections are the plurality of sections.

In an example, the plurality of sections are configured to be fixed to the platform by one or more of: gluing; clamping; tying; utilizing magnets; MIG/MAG welding; or contact welding.

In an example, the method comprises positioning with the manipulator a first section of the plurality of sections on the platform, and aligning with the manipulator the one or more sections relative to the first section.

In an example, the one or more section are all the plurality of sections except for the first section.

In an example, the positioning of the first section on the platform comprises utilization of the fabrication information.

In an example, the method comprises fixing with a manipulator of the at least one manipulator the plurality of sections to the platform.

In an example, the manipulator that aligns each section of the platform is the same as the manipulator that fixes each section to the platform.

In an example, the manipulator that aligns each section of the platform is different to the manipulator that fixes each section to the platform.

In an example, the one or more sections of the plurality of sections fixed to the platform spaced one from the other.

In an example, the method comprises fixing with the manipulator the plurality of sections to the platform such that they can subsequently be released from the platform.

In an example, the fixing of the plurality of sections to the platform by the manipulator comprises one or more of: gluing; clamping; tying; utilizing magnets; MIG/MAG welding; or contact welding.

In an example, the manipulator comprises a transformer, and a cathode system and an anode system.

Thus, the manipulator is provided with the required parts to weld metal parts together, and indeed the manipulator can also comprise means to clamp metal parts together in order to provide effective contact welding.

In an example, wherein the at least one strand of a section comprises a first strand and comprises a second strand, and wherein fabricating the section comprises fixing one or more interconnecting strands to the first strand and to the second strand.

In an example, an end of first strand is fixed to the platform and an end of the second strand is fixed at an end to the platform.

In an example, the method comprises fixing by the manipulator the first strand to the platform and fixing by the manipulator the second strand to the platform.

In an example, the first strand, the second strand, and the one or more interconnecting strands are all wire, or rod or band.

In an example, the fabricating the section comprises a bending by the manipulator of the first strand and/or a bending by the manipulator of the second strand, wherein the bending comprises utilizing the fabrication information.

In an example, the at least one strand of a section comprises a first strand and comprises a second strand, and wherein fabricating the section comprises bending by the manipulator the first strand and/or bending by the manipulator the second strand.

In an example, the at least one strand of a section comprises a first strand and comprises a second strand, wherein fabricating the section comprises fixing by the manipulator a first interconnecting strand to the first strand and fixing the first interconnecting strand to the second strand and bending the first strand and/or bending the second strand and fixing a second interconnecting strand to the first strand and fixing the second interconnecting strand to the second strand, such that a section of the first strand between the first interconnecting strand and the second interconnecting strand and/or a section of the second strand between the first interconnecting strand and the second interconnecting strand is bent, wherein the bending and fixing comprises utilizing the fabrication information.

In an example, the method comprises utilizing a stabilization platform, wherein fabricating a section comprises bending by the manipulator the at least one strand of the section whilst at least a part of the at least one strand is in contact with the stabilization platform such that the section conforms to a surface plane of the stabilization platform.

In an example, the manipulator configured to bend the strand to form a section comprises a stirrup bender.

In an example, the at least one strand of a section comprises a first strand and comprises a second strand, and the method comprises after bending by the manipulator the first strand and/or after bending by the manipulator the second strand, aligning by the manipulator the first strand relative to the second strand, wherein the aligning comprises moving and/or further bending the first strand and/or the aligning comprises a moving and/or a further bending the second strand, and wherein the aligning comprises utilizing the fabrication information.

In an example, the aligning comprises aligning a plurality of segments of the first strand relative to a plurality of segments of the second strand, and wherein after a segment of the first strand is aligned relative to a segment of the second strand, the method comprises fixing an interconnecting strand to the segment of the first strand and to the segment of the second strand.

In an example, the method comprises fixing with the manipulator the interconnecting strand to the segment of the first strand and to the segment of the second strand.

In an example, the at least one strand of a section comprises a first strand and comprises a second strand, and wherein the method comprises fixing an end of the first strand relative to an end of the second strand, and bending by the manipulator the first strand and/or bending by the manipulator the second strand whilst the end of the first strand is fixed relative to the end of the second strand.

**In** an example, the end of the first strand is fixed to the stabilization platform and the end of the second strand is fixed to the stabilization platform.

**In** an example, the manipulator is configured to fix the end of the first strand to the stabilization platform and fix the end of the second strand to the stabilization platform.

**In** an example, the method comprises fixing with the manipulator a part of one strand to a part of another strand or fixing one part of strand to another part of the same strand, wherein the fixing comprises: tying; MIG/MAG welding; or contact welding.

**In** an example, the manipulator comprises a transformer, and a cathode system and an anode system.

In an example, the method comprises fabricating and aligning the one or more sections on the platform such that at least one part of the at least one strand for each section of the one or more sections is located at or near a corresponding at least one of a plurality of intersection points defined within the fabrication information.

In an example, the at least one of the plurality of intersection points defined within the fabrication information is useable for the alignment and/or attachment of a feed wire, feed rod or feed band to the primary building structure formed from the plurality of sections.

In an example, the method comprises aligning with a feed manipulator of the at least one manipulator the feed wire or feed rod or feed band to the primary building structure at the plurality of intersection points; and wherein the aligning the feed wire or feed rod or feed band to the primary building structure at the plurality of intersection points comprises utilization of the fabrication information.

Specific detailed embodiments of the primary building structure fabrication system, and the method of fabricating a primary building structure are now described, where reference again is made to Figs. 1-12. In Figs. 1-12, the specific examples relate to a primary building structure made from a series of sections each fabricated from wire such as rebar, and in some examples feed wire, again such as rebar from a feed stock, has been attached to the primary structure. However, as discussed above, wire is only one example of the material from which the sections of the primary building structure can be fabricated, which can also be fabricated from rod or band, and the feed wire attached to the sections could also be feed rod or feed band.

Figs. 1a-1e show a representation from one figure to the next of a manipulator 30, 40, 50, 60, 70 of a primary building structure fabrication system fabricating a section of a primary building structure 90. Two wires 102 and 104 that are fixed to a platform are progressively bent and aligned into a required shape with interconnecting wires 120 being fixed between the two wires. The manipulator has a first wire interactor 210 with two parts 212 and 214 that are positioned either side of the first wire, and the manipulator has a second wire interactor 220 with two parts 222 and 224 that are positioned either side of the second wire. In this specific example, the first and second parts of the interactor is of rollers, but can be any form of part that engages with opposite sides of the wires. The manipulator starts close to the platform, and moves upwards and the two interactors can move relative to each other and move relative to their starting positions, and in this manner each wire can be bent into a required shape on the basis of fabrication information provided by an architect or structural engineer. As the manipulator moves upwards, the wise are bent and aligned into their required positions, and interconnecting wires 120 are welded between the two wires, fixing them into the required shape. The manipulator itself can have functionality to weld the interconnecting wires 120, or a separate manipulator of the primary building structure fabrication system can weld the interconnecting wires, or indeed a human operative can weld interconnecting wires when they have been bent and aligned into their correct positions.

Thus, the primary building structure fabrication system has at least one robotic arm. Each robotic arm can operate a manipulator at the end of the robotic arm, and indeed a robotic arm can change the manipulator at the end of the robotic arm or a number of robotic arms can operate each with a different manipulator if required. As shown in the figures, two wires (which also called strands and that could be rods or bands, but here for simplicity are just referred to as wires) are positioned on a platform. The two wires are positioned on the platform separated one from the other, and in this example are initially oriented vertically and parallel one to the other. The wires can be positioned by a human operator, or a manipulator at the end of a robotic arm can position the two wires on the platform. The wires are fixed to the platform by welding (for example MIG or contact welding), by gluing, by clamping or through the utilisation of magnets. The wires can be fixed to the platform by a manipulator at the end of the robotic arm, that can be the same manipulator and robotic arm that positioned the wires, or a different manipulator on the same robotic arm can be utilised, or a different manipulator on a different robotic arm can be utilised, or the human operator can fix the wires to the platform. A manipulator at the end of robotic arm, then operates from near the platform moving upwards, and progressively bends one or both of the two wires fixed to the platform, which is done according to fabrication information (such as data from a computational model that has been derived from input from an architect and/or a structural engineer) in order that the section is fabricated to correct shape. At appropriate points during this process, connecting wire can be fixed between the two wires that are fixed to the platform. The fixing of the connecting wire between the two wires fixed to the platform can be via clamping, tying or welding such as MIG or contact welding. This fixing of connecting wire between the two wires fixed the platform, as part of the bending of one of the wires by the manipulator, can be carried out by a human operator or the manipulator itself can fix the connecting wire between the two wires, or alternatively a second robotic arm with another manipulator can fix the connecting wire between the two wires fixed to the platform. When fixation is carried out by a manipulator, the head of the manipulator can have an anode and cathode to carry out contact welding, with if necessary a clamp to securely clamp metals together that are being welded. Alternatively, the head of the manipulator can have an oxyacetylene torch provided at the end, used to carry out what could be considered to be normal welding. In a different embodiment, where the manipulator fixes the connecting wires between the two wires fixed to the platform, the manipulator can have a wire dispensing and tying system.

Continuing with Figs. 1a-1e once a section has been fabricated by the primary building structure fabrication system using one or more manipulators, another section can be fabricated. The section could be the same shape and form as the previous section, or could be different form such that a whole series of different sections of different shape can be fabricated in order to make a complex shaped primary building structure. Regarding the primary building structure, the fabrication information is utilised to align these different sections relating to each other on the platform. This can be done by one of the manipulators used to fabricate sections of the primary building structure, or a different manipulator can be used to position and align the sections.

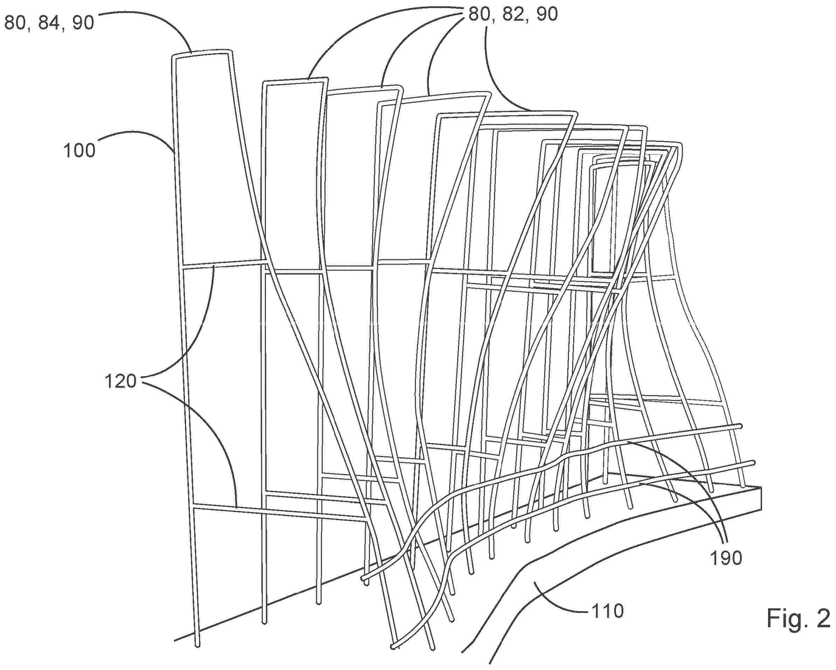

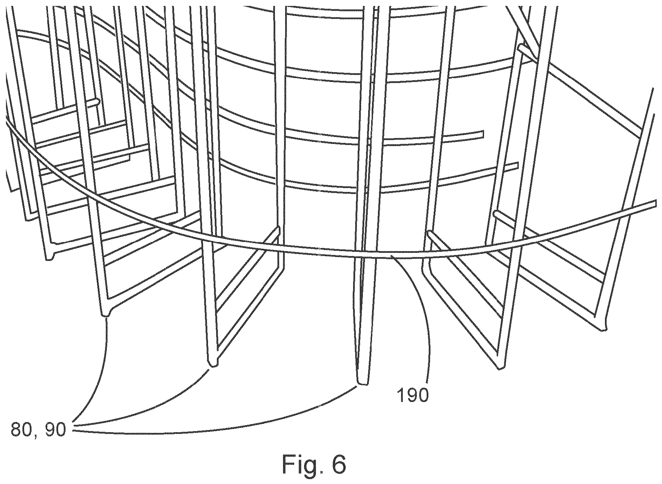

Fig. 2 shows an example of a primary building structure 90 formed from a series of differently shaped sections 80 that have been positioned relative one to the other according to fabrication information such that an overall building structure can be fabricated as required by for example architect or structural engineer. Each section need not be of a different shape, as shown in Fig. 2, but could be of similar shapes as shown for example in Fig. 6.

Continuing with Fig. 2 the primary building structure is formed from the series of sections positioned and aligned with respect to each other on the basis of the fabrication information. A manipulator has positioned a first section 84 on the platform 110 and has then positioned and aligned further sections 82 with respect to the first section on the basis of fabrication information. At the bottom of the sections 80, two lines of feed wire 190 have been aligned and attached to the sections using a feed manipulator that itself can operate at the end of robotic arm, that can be one of the above described robotic arms or a different robotic arm. By aligning and attaching a feed wire to the front, and indeed to the back, of the primary building structure the overall structure has structural integrity. The feed manipulator and how it operates is discussed in more detail below. However, a primary building structure itself formed from sections need not be interlinked one with the other with the feed wire. Thus a primary building structure formed from sections can be an end building structure, with such an example shown in Figs. 4a-4c.

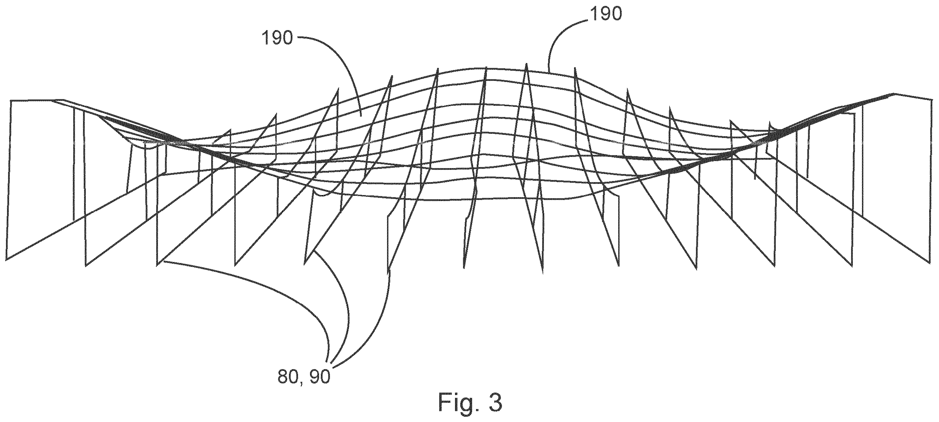

Fig. 3 shows another example of a primary building structure 90 formed from a series of differently shaped sections 80 that have been positioned relative one to the other according to fabrication information such that an overall building structure can be fabricated as required by for example architect or structural engineer. The sections can be considered to be lying on their backs and extend into the picture of Fig. 3. Again, a feed manipulator has aligned and attached feed wire 190 to the top of the sections to form an overall building structure. The primary building structure 90 was actually oriented vertically on a platform, enabling the feed manipulator to align and attach the feed wire to the front and the back (if necessary) of the sections. The sections will however not permanently by fixed to the platform, and following attachment of the feed wire to the front and back, the overall structure was released from the platform and laid on its back, as shown in Fig. 3. Thus, sections of the primary building structure can be for example manufactured in a factory, aligned and positioned with respect to one another to form the primary building structure, and then attached one to the other we feed wire to form a final building structure, which can then be detached from the platform and shipped to a construction site. Also, individual sections can be fabricated and then shipped on site to be aligned one with the other to form the primary building structure on site. However, all of the above described fabrication can actually occur on site, where "the platform" is the final positioning of the building structure, with a building structure fabrication system operating on site.

Figs. 4a-4e show examples of sections that are fabricated and positioned and aligned on the basis of fabrication information to form a complex three-dimensional building structure, in this example a "wavy" wall. Here, Fig. 4e represents this final wall structure, filled, for example, with concrete. Fig 4a represents a computational 3D model of a complex shaped wall, generated by an architect or structural engineer. Slices through this model then provide the necessary information to fabricate the sections at those positions of a real wall. This is very clearly shown in Fig. 4b where only a limited number of the sections are shown for representative purposes. Fig 4c shows an example of a complete number of sections, that could if necessary be attached one to the other by feed wire/rod/band. These sections are positioned and aligned with respect to each other to form a primary building structure for the wavy wall, which is shown in Fig. 4d. Fig 4d therefore shows an example of a final structure with a complete number of sections and attached feed wire. This final structure can be filled with concrete or have panels attached to the outer surface, with Fig. 4e showing an example of a final complex shaped wall, filled, in this example, with concrete. In this manner, very complex shapes for building structures can be fabricated, which could previously not be achieved.

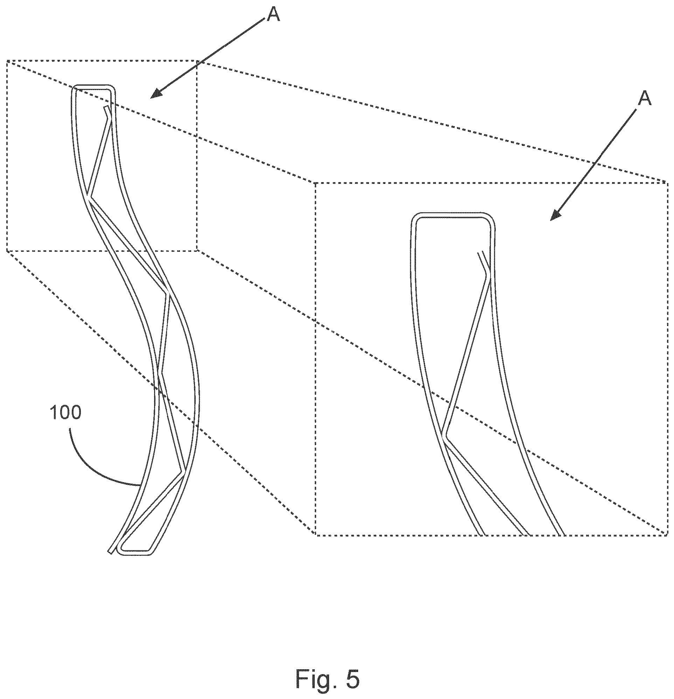

In the above, two wires were attached to a platform with one or more of these being bent, and with connecting wires being attached between the two wires. However, this is not the only way that a section can be fabricated. For example, as shown in Fig. 5 the manipulator or manipulators on the end or ends of associated robotic arms can be utilised to bend a single wire 100, such as Rebar, into shape of a required section on the basis of fabrication information. In Fig. 5 a single wire 100 has been bent into the required shape of a section, as shown in the left-hand image, and in the right hand image is an enlarged section "A" of the top part of the left-hand image. Where, parts of the wire touch each other, they have been welded into place.

Continuing with Fig. 5 the wire bender manipulator can for example comprise a stirrup bender. The manipulator or manipulators, can also have a fixation system is, such as the above described welding or tying systems, to attach parts of the bent wire back to itself to form a structurally sound section. However, once bent into shape, a human operator can if necessary fix these parts of the bent wire to itself, through for example tying or welding. It is to be noted that the bending of a strand in the form wire, rod or band, does not require that the strand be fixed to a platform. But once bent, the section can be fixed to a platform and aligned with other section fabricated in the same way, and attached one to the other via aligned and bent feed wire/rod/ band and then if necessary detached from the platform.

Fig. 6 then shows a series of sections 80 forming a primary building structure 90, where a whole series of feed wires 190 have been aligned by bending and attached to the back of the primary building structure and a first feed wire 190 has been aligned by bending and attached to the front of the sections of the primary building structure. The feed manipulator on the end of the robotic arm has been used to align, bend and attach the feed wire to the primary building structure.

The feed manipulator and how it operates to align and attach the feed wire, or feed rod, or feed band to a primary building structure is now described in more detail below.

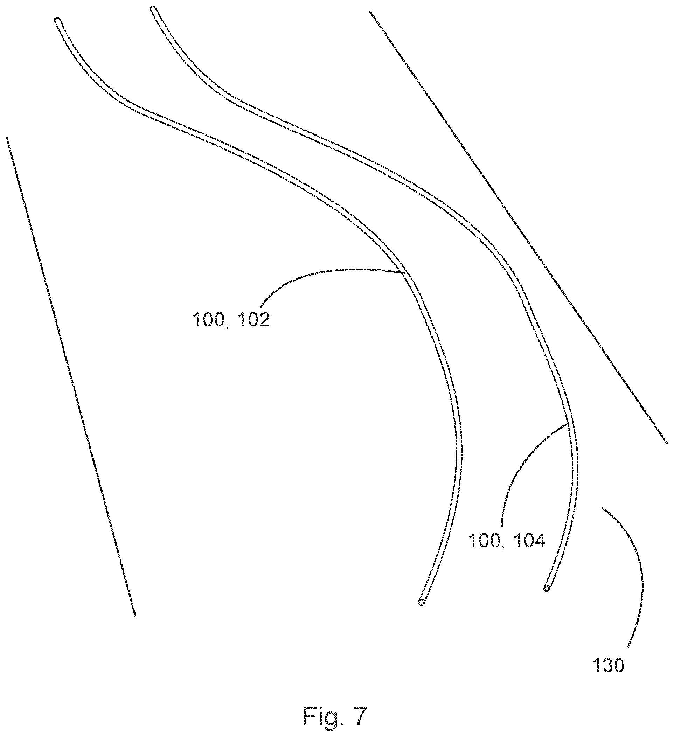

To assist in the fabrication of sections 80, stabilisation platform can be utilised 130 as shown in Figs. 7-9. In Figs. 7-9 the stabilisation platform is in the form of horizontal table, but stabilisation platform could be oriented vertically to assist in the fabrication of sections whilst they are vertically aligned, and indeed the stabilisation platform need not be flat but can be curved.

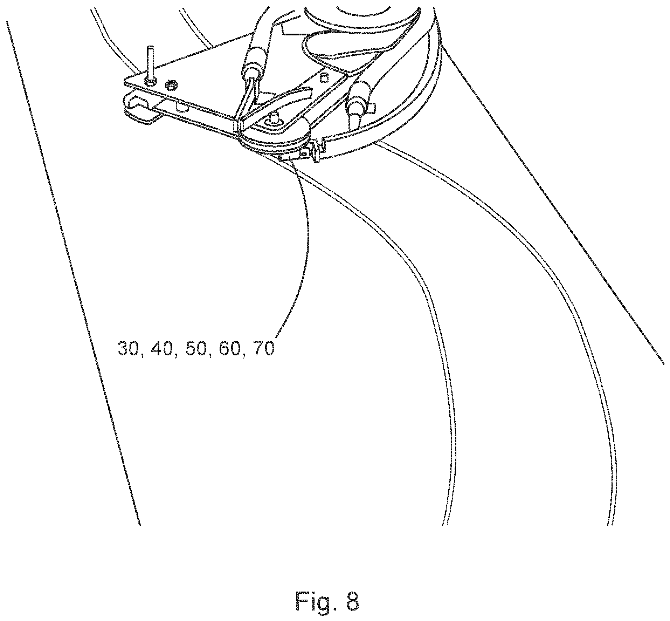

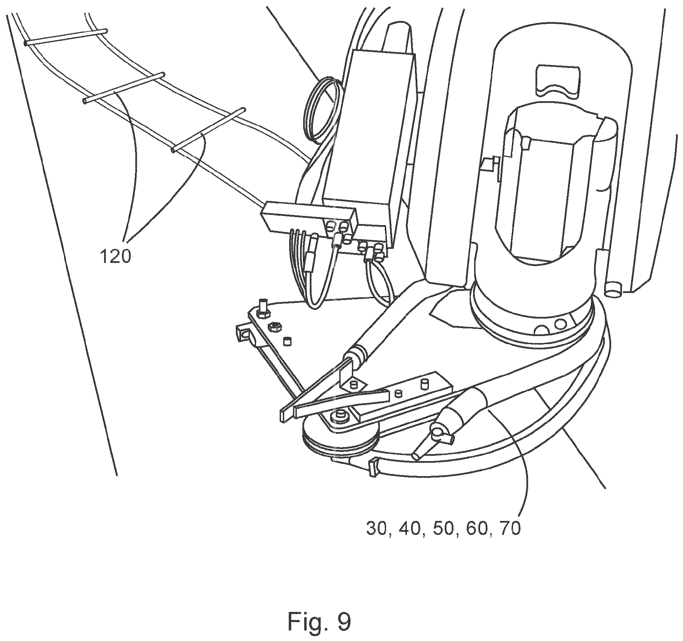

Continuing with Figs. 7-9 two wires 102 and 104 that will form a section 80 have been bent into shape by a manipulator, which could have been carried out with the wires on the stabilisation platform 130 or could have been carried out away from the stabilisation platform. The wires however can then relax, and show some elastic properties and move away from the required end shape for a section. Therefore, as shown in Figs. 8 and 9 a manipulator, which could be the same manipulator that initially bent the two wires, or a different manipulator, which now progresses along the two wires and realigns them into the correct alignment with respect to each other and with respect to the global required shape of the section, on the basis of fabrication information. As this is carried out, interconnecting wires 120 are welded between segments of the two wires 102 and 104 that are correctly aligned. This can be carried out by the manipulator itself, carried out by another manipulator, or indeed carried out by human operative who comes to the table and welds an interconnecting section 120 between the two wires 102 and 104 close to where they are being held in correct alignment by the manipulator. The rear part of the manipulator, can be as detailed above with respect to the manipulator described in conjunction with Figs. 1a-1e. Thus, in a specific example and referring to Figs. 8 and 9, the underside of the manipulator, not shown, has first and second wire manipulators 210 and 220. The first wire interactor 210 has two parts 212 and 214 that are positioned either side of one wire, and the second wire interactor 220 has two parts 222 and 224 that are positioned either side of the second wire. The manipulator then realigns the wires using the two wire interactors.

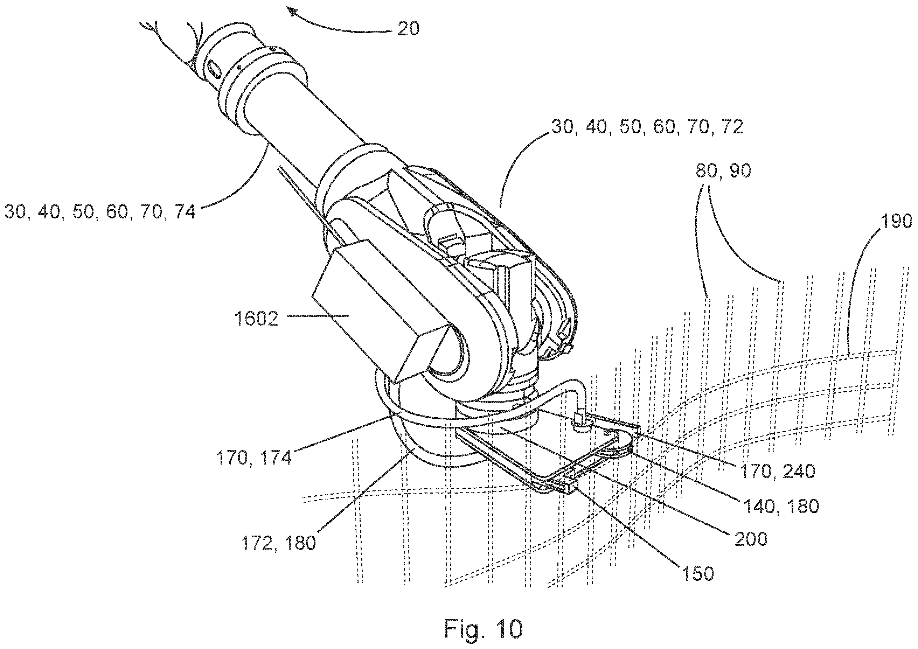

Fig. 10 shows a detailed example of a manipulator 30, 40, 50, 60, 70, 72 that can fabricate a section and indeed that can also attach feed wire to the front of a primary building structure 90. A processing unit 20 (not shown) communicates with the manipulator head 72 at the end of a robotic arm 74. The manipulator has a transformer 160, and a rolling bending positive copper anode 140 connected to the transformer by a positive anode cable 172 with this forming an anode system 180, the manipulator has a negative copperplate 240 connected to the transformer by a negative cathode cable 174 with this forming a cathode system 170. The manipulator also has a Rebar threader 150, which is a conduit section through which Rebar is threaded. Movement of the head of the manipulator leads to alignment and bending of feed wire, or indeed of the wire of a section as required, and the cathode system and anode system operate together in order to weld the feed wire 190 to sections 80 of the primary building structure 90, and indeed to weld interconnecting wires 120 to one or wires 100, 102, 104 of a section.

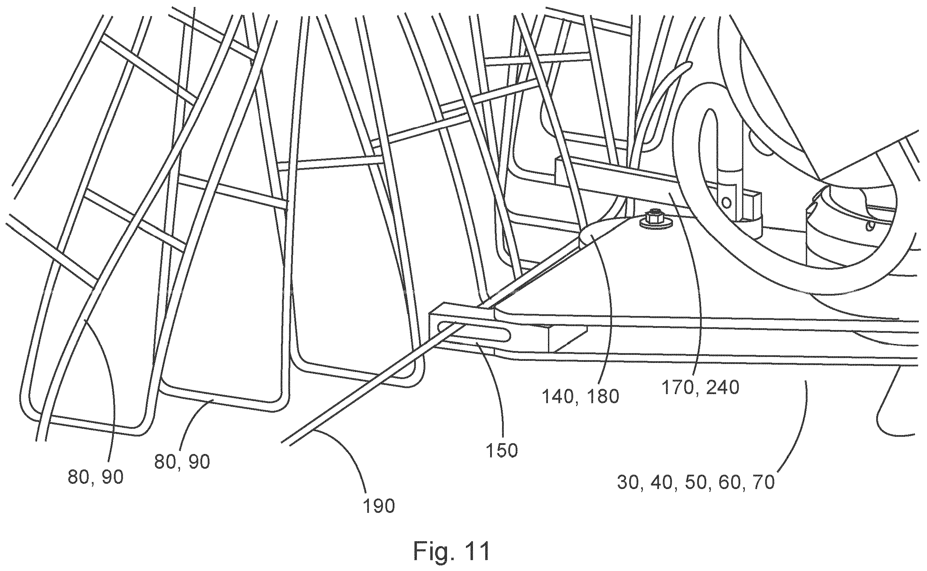

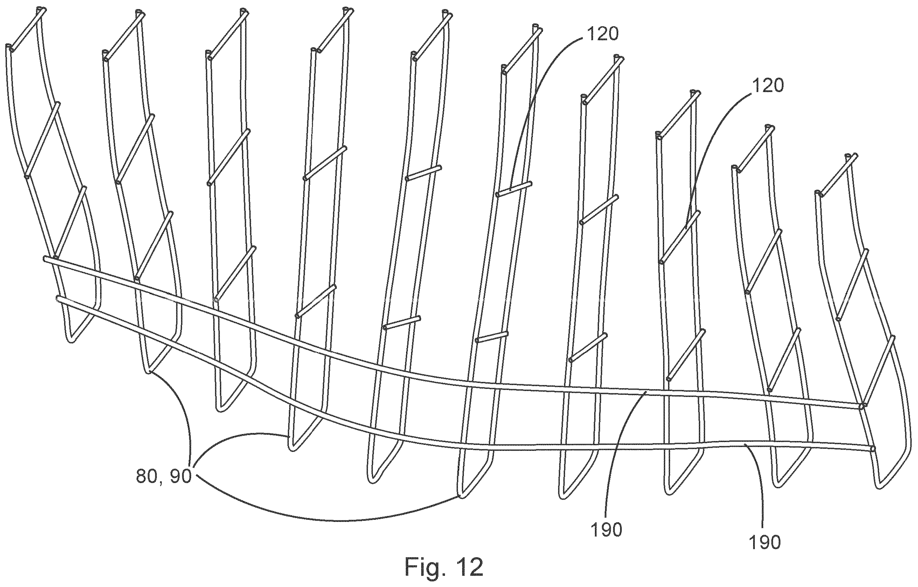

Fig. 11 shows another detailed example of a manipulator. It is to be noted that the bottom of the plate of the manipulator can have the first and second wires interactors 210 and 220 that can move relative to each other in order to align and bend two wires with respect to each other at the same time. Fig. 12 shows an example of a primary building structure 90 with feed wire 190 attached to a number of sections 80 that has been fabricated by the manipulator shown in Fig. 11.

In the discussion below, the specific examples relate to a feed wire, such as rebar from a feed stock, that is attached to a primary building structure in the form of a series of sections of wire, such as rebar, fabricated as discussed above. However, as discussed above, the feed wire could be feed rod or feed band, and they not have a circular cross-section but could be rectangular shaped. As discussed above, this also applies to the "wire" used to fabricate the primary building structure itself, which could be wire, rod or band.

A number of sections are fabricated and positioned and aligned on a platform to form a primary building structure. A robotic arm of the primary building structure fabrication system has a feed manipulator, which can also be called an end-effector, which is used to align and attach the feed wire to the primary building structure, which in this example is itself formed from wire such as Rebar. The primary building structure shown is for example that discussed above and shown in the figures.

As shown in Figs. 2, 3, 6, 11, and 12 the feed manipulator 70 of the primary building structure fabrication system, has aligned and attached a number of feed wires 190 to primary wire structure 90, and will continue to attach feed wires to the primary building structures. These feed wires have been arranged horizontally and each line of feed wire is at a different vertical position up the primary building structure. The feed wires need not be aligned horizontally, and can be angled to the horizontal, and indeed can be wavy in terms of varying in angle, for example relative to the horizontal. The wire of the primary building structure and of the feed wire can be re-bar, which is steel wire commonly used in the building industry, and familiar to those who have seen buildings being made from reinforced concrete walls. It is to be noted that the feed manipulator 70 can also fabricate sections of the primary building structure.

The feed manipulator 70 is located at the end of a robotic arm. The feed manipulator has a body portion 74, and a head portion 72. The system is configured to have 6 degrees of freedom, 3 for positioning and 3 for rotation. The feed wire (rebar) as shown in Figs. 2, 3, 6, 11 and 12 can come from a roll or bar stock. The feed wire extends through a rebar threader 150 (also termed a conduit section) and goes round a roller 140. The 6DOF system of the manipulator enables to bend and align the feed wire 190, for example via a lateral force being applied by between the roller and rebar threader but also due to global movement of the feed manipulator. The wire can then be bent, positioned and aligned to intersection points in space, which in this example are aligned with the primary structure 90. The intersection points can for example be located along the vertical wires 100 (parts of sections 80) of the primary building structure 90. When the aligned and bent wire has been correctly aligned with an intersection point (a vertical wire of the primary structure) the feed wire is attached to the wire of the primary structure. In this example, this is done through contact welding. However, other forms of attachment are possible. The manipulator has a transformer 160 and the roller is positively charged to form an anode. A negative cathode copper plate 240 is located adjacent to the anode, and these are used to weld the feed wire 190 to the primary wire structure 90. The robotic arm and manipulator then continues onwards aligning and bending the feed wire to the next intersection point, where again the feed wire is attached to the primary building structure through contact welding. In a different example of the manipulator, rather than using contact welding, an oxyacetylene torch is provided at the end, to apply what could be considered normal welding, and in a different example the manipulator has wire dispensing and tying system, to tie the feed wire to the primary structure using thinner wire than the feed wire itself.

The sections 80 that form the primary building structure 90 are fabricated and positioned on the basis of fabrication information. This fabrication information includes the locations of intersection points relative to each other. Thus, the primary building structure can be fabricated such that sections of its wires are located at intersection points. The feed manipulator can then, on the basis of the same fabrication information, bend position and align and fix feed wire to the primary building structure at these intersection points that match the locations of the primary building structure wire is. However, for expediency the primary building structure can be aligned on the basis of the fabrication information, but with sections not exactly aligned such that parts of wires are located at intersection points. However, the feed manipulator can grab a wire segment of a section that is not at an intersection point in space, and move this wire segment to the correct intersection point in space and bending line the feed wire to that position and fix the two wires together, for example via contact welding.

The robotic arm or arms of the primary building fabrication system, manipulator or manipulators can have a number of different sensor systems 200, to aid in positioning of the manipulator head with respect to fabrication of sections of the primary building structure, positioning and alignment of the sections to form a primary building structure, and alignment and attachment of feed wire to the primary building structure. Such a sensor system is for example a 6DOF torque sensor

In this manner a robotic based primary building structure fabrication system and method are used to create 3D structures from an arbitrary 3D volume. A series of wire sections 80 through the 3D volume, that can be vertically aligned, constitute a skeletal base structure or primary building structure 90. This acts as a reference structure to apply feed wire 190 horizontally onto the sections through a robotic 3D movement. Robotic fabrication enables the production of the 3D structure in a controlled prefabrication environment, as prefabricated elements on the construction site, or directly in situ.

The general detailed workflow of the system and method is as follows:
1. Processing of geometry data to 3D structure data.
2. Robotic production of slices/sections based on the 3D information from the computational model. The slices/sections can be produced as planar 2D slices/sections, or as 3D slices/sections. Digitally controlled production methods to fabricate the slices include:
   a. Robotic forming, positioning and interlinking of two wires with a third wire to create a slice, freely in space.
   b. Stationary bending and interlinking of two wires with a third wire.
   c. Forming of a wire into a slice with a wire bender (e.g. stirrup bender) and connecting of intersections.
3. Robotic placing of the slices/sections on a building platform according to the 3D information of the computational model. The slices/sections can be fixed to the building platform in various ways:
   a. Welding (e.g. MIG, contact welding, etc.)
   b. Gluing
   c. Clamping
   d. Magnets
4. Interconnecting of the structure by guiding and applying wire between the slices/sections through a robotic 3D motion. Hence, the slices/sections act as geometric reference and as support points for the wire, to be positioned and bent in 3D. The wire can be fastened to the slices in various ways:
   a. Welding (MIG, contact welding, etc.)
   b. Tying
   c. Clamping
5. Placing the wire from the ground up, the structure becomes more stable with each layer. Through parallelization of the wire application process, the production speed can be increased (e.g. cooperative robotic wire application, end-effector with parallel wire deploying, etc.)
6. Releasing of the structure from the base structure and transportation to construction site (prefabrication scenario).

A specific exemplar workflow, of a complete start to finish operate as follows, with workflow sections following each other:
1. Design Workflow
   a. A computational tool slices the design and calculates slices/sections fabrication data and robotic welding paths.
2. Slice/section Pre-bending
   a. Slice/section production data is sent to a steel bending machine to prefabricate slices/sections.
3. Slice/section Welding
   a. Pre-bended slices/sections are robotically flattened, brought into exact shape and welded on the welding station.
4. Picking and Placing
   a. The slices/sections are picked from the welding station, placed and welded on the fabrication platform. This forms a primary building structure or a part of a primary building structure.
5. Rolling & Welding
   a. A continuous steel rebar is robotically contact-welded on top of the vertical slices. This forms a finalized structure piece or building structure or part of a building structure.
6. Transportation
   a. Different structure pieces (parts of building structures) are transported by truck to the construction site.
7. Assembly
   a. Discretized parts are assembled together on site with help of a crane.
8. Concrete Filling
   a. The full finalized structure is filled with accelerated concrete, preventing massive leaking.
9. Shotcrete Finishing
   a. As a last step, a concrete layer is projected onto the finalized structure surface.

While the invention has been illustrated and described in detail in the drawings and foregoing description, such illustration and description are to be considered illustrative or exemplary and not restrictive.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A primary building structure fabrication system for generating a primary building structure that matches a complex shape, formed by a series of sections, being 2D- or 3D-sections, comprising:
a processing unit (20); and
- at least one manipulator (30, 40, 50, 60, 70), wherein the manipulator is configured to be controlled to fabricate a section (80, 82, 84) of the primary building structure (90) out of at least one strand (100); wherein the at least one strand comprises one or more of wire, rod or band; and wherein the control comprises utilization of fabrication information and wherein the manipulator comprises a first strand interactor (210) and a second strand interactor (220), wherein the first strand interactor is configured to support, hold or grasp a first strand (102) of the at least one strand of the section and wherein the second strand interactor is configured to support, hold or grasp a second strand (104) of the at least one strand of the section, and wherein the first strand interactor is configured to move relative to the second strand interactor on the basis of the fabrication information
wherein, the processing unit is configured to receive fabrication information;
wherein, one or more manipulators (30, 40, 70) are configured to fabricate a plurality of sections (80) of a primary building structure (90) and wherein a manipulator (30, 50, 70) of the at least one manipulator (30, 40, 50, 60, 70) is configured to align one or more sections (82) of the plurality of sections on a platform (110), and wherein the alignment comprises utilization of the fabrication information and wherein a manipulator (30, 50, 60, 70) of the at least one manipulator (30, 40, 50, 60, 70) is configured to fix the plurality of sections to the platform;
wherein, each section comprises at least one strand (100);
and
wherein, the fabrication of the plurality of sections comprises utilization of the fabrication information.

2. System according to claim 1, wherein the manipulator (30, 50, 70) is configured to position a first section (84) of the plurality of sections on the platform, and wherein the manipulator is configured to align the one or more sections (82) relative to the first section.

3. System according to claim 1 or 2, wherein the manipulator (30, 50, 60, 70) is configured to fix the plurality of sections to the platform such that they can subsequently be released from the platform.

4. System according to any of claims 2-3, wherein fixation of the plurality of sections to the platform by the manipulator (30, 50, 60, 70) comprises one or more of: gluing; clamping; tying; utilizing magnets; MIG/MAG welding; or contact welding.

5. System according to any of claims 1-4, wherein the at least one strand of a section comprises a first strand (102) and comprises a second strand (104), and wherein to fabricate the section the one or more manipulators (30, 40, 70) are configured to fix one or more interconnecting strands (120) to the first strand and to the second strand.

6. System according to any of claims 1-5, wherein to fabricate a section the one or more manipulators (30, 40, 70) are configured to bend the at least one strand of the section.

7. System according to any of claims 1-6, wherein the at least one strand of a section comprises a first strand (102) and comprises a second strand (104), and wherein to fabricate the section the one or more manipulators (30, 40, 70) are configured to bend the first strand and/or the one or more manipulators are configured to bend the second strand.

8. System according to any of claims 1-7, wherein the at least one strand of a section comprises a first strand (102) and comprises a second strand (104), wherein to fabricate the section the one or more manipulators are configured to fix a first interconnecting strand (122) to the first strand and fix the first interconnecting strand to the second strand; wherein the one or more manipulators (30, 40, 70) are configured to bend the first strand and/or bend the second strand; and wherein the one or more manipulators (30, 40, 70) are configured to fix a second interconnecting strand (124) to the first strand and fix the second interconnecting strand to the second strand, such that a section of the first strand between the first interconnecting strand and the second interconnecting strand and/or a section of the second strand between the first interconnecting strand and the second interconnecting strand is bent, wherein the bending and fixing comprises utilization of the fabrication information.

9. System according to any of claims 6-8, wherein the system comprises a stabilization platform (130), and wherein to fabricate a section the one or more manipulators (30, 40, 70) are configured to bend the at least one strand of the section whilst at least a part of the at least one strand is in contact with the stabilization platform such that the section conforms to a surface plane of the stabilization platform.

10. System according to claim 9, wherein the at least one strand of a section comprises a first strand (102) and comprises a second strand (104), wherein after the one or more manipulators (30, 40, 70) have bent the first strand and/or bent the second strand, the one or more manipulators are configured to align the first strand relative to the second strand, wherein the alignment comprises a movement and/or a further bending of the first strand and/or the alignment comprises a movement and/or a further bending of the second strand, and wherein the alignment comprises utilization of the fabrication information.

11. System according to claim 10, wherein the alignment comprises an alignment of a plurality of segments of the first strand relative to a plurality of segments of the second strand, and wherein after a segment of the first strand is aligned relative to a segment of the second strand, the segment of the first strand is fixed to the segment of the second strand with an interconnecting strand (120).

12. System according to claim 11, wherein the one or more manipulators (30, 40, 70) are configured to fix the interconnecting strand to the segment of the first strand and to the segment of the second strand.

13. System according to any of claims 7-12, wherein the at least one strand of a section comprises a first strand and comprises a second strand, and wherein the one or more manipulators (30, 40, 70) are configured to bend the first strand and/or bend the second strand whilst an end of the first strand is fixed relative to an end of the second strand.

14. System according to any of claims 1-13, wherein the manipulator is configured to fix a part of one strand to a part of another strand and/or fix one part of strand to another part of the same strand, wherein the fixation comprises: tying; MIG/MAG welding; or contact welding.

15. System according to any of claims 1-14, wherein the one or more sections are fabricated and aligned on the platform such that at least one part of the at least one strand for each section of the one or more sections is located at or near a corresponding at least one of a plurality of intersection points defined within the fabrication information.

16. System according to claim 15, wherein the at least one of the plurality of intersection points defined within the fabrication information is useable for the alignment and/or attachment of a feed strand (190) to the primary building structure formed from the plurality of sections.

17. System according to any of the preceding claims, wherein a first strand interactor (210) comprises a first part (212) and a second part (214) and a second strand interactor comprises a first part (222) and a second part (224), wherein the first part of the first stand interactor is configured to contact a first side of the first strand and the second part of the first stand interactor is configured to contact a second side of the first strand opposite to the first side, and wherein the first part of the second stand interactor is configured to contact a first side of the second strand and the second part of the second stand interactor is configured to contact a second side of the second strand opposite to the first side.

18. A method (300) of fabricating a primary building structure, that matches a complex shape, formed by a series of sections, being 2D- or 3D-sections, the method comprising:
a) receiving (310) by a processing unit fabrication information; and
b) fabricating (320) with a manipulator of at least one manipulator a plurality of sections of a primary building structure; wherein the manipulator is configured to be controlled to fabricate a section (80, 82, 84) of the primary building structure (90) out of at least one strand (100); wherein the at least one strand comprises one or more of wire, rod or band; and wherein the control comprises utilization of fabrication information and wherein the manipulator comprises a first strand interactor (210) and a second strand interactor (220), wherein the first strand interactor is configured to support, hold or grasp a first strand (102) of the at least one strand of the section and wherein the second strand interactor is configured to support, hold or grasp a second strand (104) of the at least one strand of the section, and wherein the first strand interactor is configured to move relative to the second strand interactor on the basis of the fabrication information and wherein in particular a manipulator (30, 50, 70) of the at least one manipulator (30, 40, 50, 60, 70) is configured to align one or more sections (82) of the plurality of sections on a platform (110), and wherein the alignment comprises utilization of the fabrication information and wherein a manipulator (30, 50, 60, 70) of the at least one manipulator (30, 40, 50, 60, 70) is configured to fix the plurality of sections to the platform;
wherein, each section comprises at least one strand;
wherein, the at least one strand comprises one or more of wire, rod or band; and
wherein, the fabricating the plurality of sections comprises utilizing the fabrication information.

## Patentansprüche

1. Primäres Gebäudestrukturherstellungssystem zum Erzeugen einer primären Gebäudestruktur, die einer komplexen Form entspricht, die durch eine Reihe von Abschnitten gebildet wird, die 2D- oder 3D-Abschnitte sind, umfassend:
eine Verarbeitungseinheit (20); und
- mindestens einen Manipulator (30, 40, 50, 60, 70), wobei der Manipulator konfiguriert ist, um gesteuert zu werden, um einen Abschnitt (80, 82, 84) der primären Gebäudestruktur (90) aus mindestens einem Strang (100) herzustellen; wobei der mindestens eine Strang eines oder mehrere von Draht, Stange oder Band umfasst; und wobei die Steuerung die Verwendung von Herstellungsinformationen umfasst wobei der Manipulator einen ersten Stranginteraktor (210) und einen zweiten Stranginteraktor (220) umfasst, wobei der erste Stranginteraktor konfiguriert ist, um einen ersten Strang (102) des mindestens einen Strangs des Abschnitts zu stützen, zu halten oder zu greifen, und wobei der zweite Stranginteraktor konfiguriert ist, um einen zweiten Strang (104) des mindestens einen Strangs des Abschnitts zu stützen, zu halten oder zu greifen, und wobei der erste Stranginteraktor konfiguriert ist, um sich auf der Grundlage der Herstellungsinformationen relativ zu dem zweiten Stranginteraktor zu bewegen,
wobei die Verarbeitungseinheit konfiguriert ist, um Herstellungsinformationen zu empfangen; wobei ein oder mehrere Manipulatoren (30, 40, 70) konfiguriert sind, um eine Vielzahl von Abschnitten (80) einer primären Gebäudestruktur (90) herzustellen, und wobei ein Manipulator (30, 50, 70) des mindestens einen Manipulators (30, 40, 50, 60, 70) konfiguriert ist, um einen oder mehrere Abschnitte (82) der Vielzahl von Abschnitten auf einer Plattform (110) auszurichten, und wobei die Ausrichtung die Verwendung der Herstellungsinformationen umfasst und wobei ein Manipulator (30, 50, 60, 70) des mindestens einen Manipulators (30, 40, 50, 60, 70) konfiguriert ist, um die Vielzahl von Abschnitten an der Plattform zu befestigen;
wobei jeder Abschnitt mindestens einen Strang (100) umfasst;
und wobei die Herstellung der Vielzahl von Abschnitten die Verwendung der Herstellungsinformationen umfasst.

2. System nach Anspruch 1, wobei der Manipulator (30, 50, 70) konfiguriert ist, um einen ersten Abschnitt (84) der Vielzahl von Abschnitten auf der Plattform zu positionieren, und wobei der Manipulator konfiguriert ist, um den einen oder die mehreren Abschnitte (82) relativ zu dem ersten Abschnitt auszurichten.

3. System nach Anspruch 1 oder 2, wobei der Manipulator (30, 50, 60, 70) konfiguriert ist, um die Vielzahl von Abschnitten an der Plattform zu befestigen, sodass sie anschließend von der Plattform gelöst werden können.

4. System nach einem der Ansprüche 2-3, wobei die Befestigung der Vielzahl von Abschnitten an der Plattform durch den Manipulator (30, 50, 60, 70) eines oder mehrere von Folgendem umfasst: Kleben; Klemmen; Binden; Verwenden von Magneten; MIG/MAG-Schweißen; oder Kontaktschweißen.

5. System nach einem der Ansprüche 1-4, wobei der mindestens eine Strang eines Abschnitts einen ersten Strang (102) umfasst und einen zweiten Strang (104) umfasst, und wobei zur Herstellung des Abschnitts der eine oder die mehreren Manipulatoren (30, 40, 70) konfiguriert sind, um einen oder mehrere Verbindungsstränge (120) an dem ersten Strang und an dem zweiten Strang zu befestigen.

6. System nach einem der Ansprüche 1-5, wobei zur Herstellung eines Abschnitts der eine oder die mehreren Manipulatoren (30, 40, 70) konfiguriert sind, um den mindestens einen Strang des Abschnitts zu biegen.

7. System nach einem der Ansprüche 1-6, wobei der mindestens eine Strang eines Abschnitts einen ersten Strang (102) umfasst und einen zweiten Strang (104) umfasst, und wobei zur Herstellung des Abschnitts der eine oder die mehreren Manipulatoren (30, 40, 70) konfiguriert sind, um den ersten Strang zu biegen, und/oder der eine oder die mehreren Manipulatoren konfiguriert sind, um den zweiten Strang zu biegen.

8. System nach einem der Ansprüche 1-7, wobei der mindestens eine Strang eines Abschnitt einen ersten Strang (102) umfasst und einen zweiten Strang (104) umfasst, wobei zur Herstellung des Abschnitts der eine oder die mehreren Manipulatoren konfiguriert sind, um einen ersten Verbindungsstrang (122) an dem ersten Strang zu befestigen und den ersten Verbindungsstrang an dem zweiten Strang zu befestigen; wobei der eine oder die mehreren Manipulatoren (30, 40, 70) konfiguriert sind, um den ersten Strang zu biegen und/oder den zweiten Strang zu biegen; und wobei der eine oder die mehreren Manipulatoren (30, 40, 70) konfiguriert sind, um einen zweiten Verbindungsstrang (124) an dem ersten Strang zu befestigen und den zweiten Verbindungsstrang an dem zweiten Strang zu befestigen, sodass ein Abschnitt des ersten Strangs zwischen dem ersten Verbindungsstrang und dem zweiten Verbindungsstrang und/oder ein Abschnitt des zweiten Strangs zwischen dem ersten Verbindungsstrang und dem zweiten Verbindungsstrang gebogen wird, wobei das Biegen und Befestigen die Verwendung der Herstellungsinformationen umfasst.

9. System nach einem der Ansprüche 6-8, wobei das System eine Stabilisierungsplattform (130) umfasst, und wobei zur Herstellung eines Abschnitts der eine oder die mehreren Manipulatoren (30, 40, 70) konfiguriert sind, um den mindestens einen Strang des Abschnitts zu biegen, während mindestens ein Teil des mindestens einen Strangs mit der Stabilisierungsplattform in Kontakt steht, sodass der Abschnitt einer Oberflächenebene der Stabilisierungsplattform entspricht.

10. System nach Anspruch 9, wobei der mindestens eine Strang eines Abschnitts einen ersten Strang (102) umfasst und einen zweiten Strang (104) umfasst, wobei, nachdem der eine oder die mehreren Manipulatoren (30, 40, 70) den ersten Strang gebogen haben und/oder den zweiten Strang gebogen haben, der eine oder die mehreren Manipulatoren konfiguriert sind, um den ersten Strang relativ zu dem zweiten Strang auszurichten, wobei die Ausrichtung eine Bewegung und/oder ein weiteres Biegen des ersten Strangs umfasst und/oder die Ausrichtung eine Bewegung und/oder ein weiteres Biegen des zweiten Strangs umfasst, und wobei die Ausrichtung die Verwendung der Herstellungsinformationen umfasst.

11. System nach Anspruch 10, wobei die Ausrichtung eine Ausrichtung einer Vielzahl von Segmenten des ersten Strangs relativ zu einer Vielzahl von Segmenten des zweiten Strangs umfasst, und wobei, nachdem ein Segment des ersten Strangs relativ zu einem Segment des zweiten Strangs ausgerichtet wurde, das Segment des ersten Strangs an dem Segment des zweiten Strangs mit einem Verbindungsstrang (120) befestigt wird.

12. System nach Anspruch 11, wobei der eine oder die mehreren Manipulatoren (30, 40, 70) konfiguriert sind, um den Verbindungsstrang an dem Segment des ersten Strangs und an dem Segment des zweiten Strangs zu befestigen.

13. System nach einem der Ansprüche 7-12, wobei der mindestens eine Strang eines Abschnitts einen ersten Strang umfasst und einen zweiten Strang umfasst, und wobei der eine oder die mehreren Manipulatoren (30, 40, 70) konfiguriert sind, um den ersten Strang zu biegen und/oder den zweiten Strang zu biegen, während ein Ende des ersten Strangs relativ zu einem Ende des zweiten Strangs befestigt ist.

14. System nach einem der Ansprüche 1-13, wobei der Manipulator konfiguriert ist, um einen Teil eines Strangs an einem Teil eines anderen Strangs zu befestigen und/oder einen Teil des Strangs an einem anderen Teil desselben Strangs zu befestigen, wobei die Befestigung Folgendes umfasst: Binden; MIG/MAG-Schweißen; oder Kontaktschweißen.

15. System nach einem der Ansprüche 1-14, wobei der eine oder die mehreren Abschnitte auf der Plattform derart hergestellt und ausgerichtet werden, dass sich mindestens ein Teil des mindestens einen Strangs für jeden Abschnitt des einen oder der mehreren Abschnitte an oder nahe einem entsprechenden mindestens einen einer Vielzahl von Schnittpunkten befindet, die innerhalb der Herstellungsinformationen definiert sind.

16. System nach Anspruch 15, wobei der mindestens eine der Vielzahl von Schnittpunkten, die innerhalb der Herstellungsinformationen definiert sind, für die Ausrichtung und/oder Befestigung eines Zuführungsstrangs (190) an der primären Gebäudestruktur verwendbar ist, die aus der Vielzahl von Abschnitten gebildet ist.

17. System nach einem der vorhergehenden Ansprüche, wobei ein erster Stranginteraktor (210) einen ersten Teil (212) und einen zweiten Teil (214) umfasst und ein zweiter Stranginteraktor einen ersten Teil (222) und einen zweiten Teil (224) umfasst, wobei der erste Teil des ersten Stranginteraktors konfiguriert ist, um eine erste Seite des ersten Strangs zu berühren, und der zweite Teil des ersten Stranginteraktors konfiguriert ist, um eine zweite Seite des ersten Strangs gegenüber der ersten Seite zu berühren, und wobei der erste Teil des zweiten Stranginteraktors konfiguriert ist, um eine erste Seite des zweiten Strangs zu berühren, und der zweite Teil des zweiten Stranginteraktors konfiguriert ist, um eine zweite Seite des zweiten Strangs gegenüber der ersten Seite zu berühren.

18. Verfahren (300) zum Herstellen einer primären Gebäudestruktur, die einer komplexen Form entspricht, die durch eine Reihe von Abschnitten gebildet wird, die 2D- oder 3D-Abschnitte sind, das Verfahren umfassend:
a) Empfangen (310) von Herstellungsinformationen durch eine Verarbeitungseinheit; und
b) Herstellen (320), mit einem Manipulator von mindestens einem Manipulator, einer Vielzahl von Abschnitten der primären Gebäudestruktur; wobei der Manipulator konfiguriert ist, um gesteuert zu werden, um einen Abschnitt (80, 82, 84) der primären Gebäudestruktur (90) aus mindestens einem Strang (100) herzustellen; wobei der mindestens eine Strang eines oder mehrere von Draht, Stange oder Band umfasst; und wobei die Steuerung die Verwendung von Herstellungsinformationen umfasst der Manipulator einen ersten Stranginteraktor (210) und einen zweiten Stranginteraktor (220) umfasst, wobei der erste Stranginteraktor konfiguriert ist, um einen ersten Strang (102) des mindestens einen Strangs des Abschnitts zu stützen, zu halten oder zu greifen, und wobei der zweite Stranginteraktor konfiguriert ist, um einen zweiten Strang (104) des mindestens einen Strangs des Abschnitts zu stützen, zu halten oder zu greifen, und wobei der erste Stranginteraktor konfiguriert ist, um sich auf der Grundlage der Herstellungsinformationen relativ zu dem zweiten Stranginteraktor zu bewegen, und wobei insbesondere ein Manipulator (30, 50, 70) des mindestens einen Manipulators (30, 40, 50, 60, 70) konfiguriert ist, um einen oder mehrere Abschnitte (82) der Vielzahl von Abschnitten auf einer Plattform (110) auszurichten, und wobei die Ausrichtung die Verwendung der Herstellungsinformationen umfasst und wobei ein Manipulator (30, 50, 60, 70) des mindestens einen Manipulators (30, 40, 50, 60, 70) konfiguriert ist, um die Vielzahl von Abschnitten an der Plattform zu befestigen;
wobei jeder Abschnitt mindestens einen Strang umfasst;
wobei der mindestens eine Strang eines oder mehrere von Draht, Stange oder Band umfasst; und wobei die Herstellung der Vielzahl von Abschnitten die Verwendung der Herstellungsinformationen umfasst.

## Revendications

1. Système de fabrication de structure principale de bâtiment pour générer une structure principale de bâtiment qui correspond à une forme complexe, composée d'une série de sections, qui sont des sections 2D ou 3D, comprenant:
une unité de traitement (20) ; et
- au moins un manipulateur (30, 40, 50, 60, 70), dans lequel le manipulateur est configuré pour être commandé afin de fabriquer une section (80, 82, 84) de la structure principale de bâtiment (90) à partir d'au moins un toron (100) ; dans lequel l'au moins un toron est constitué d'un ou plusieurs fils, tiges ou bandes ; et dans lequel la commande comprend l'utilisation d'informations de fabrication et dans lequel le manipulateur comprend un premier interacteur de toron (210) ainsi qu'un second interacteur de toron (220), dans lequel le premier interacteur de toron est configuré pour soutenir, maintenir ou saisir un premier toron (102) de l'au moins un toron de la section et dans lequel le second interacteur de toron est configuré pour soutenir, maintenir ou saisir un second toron (104) de l'au moins un toron de la section, et dans lequel le premier interacteur de toron est configuré pour se déplacer par rapport au second interacteur de toron sur la base des informations de fabrication,
dans lequel l'unité de traitement est configurée pour recevoir des informations de fabrication ; dans lequel un ou plusieurs manipulateurs (30, 40, 70) sont configurés pour fabriquer une pluralité de sections (80) d'une structure principale de bâtiment (90) et dans lequel un manipulateur (30, 50, 70) de l'au moins un manipulateur (30, 40, 50, 60, 70) est configuré pour aligner une ou plusieurs sections (82) de la pluralité de sections sur une plate-forme (110), et
dans lequel l'alignement comprend l'utilisation des informations de fabrication et dans lequel un manipulateur (30, 50, 60, 70) de l'au moins un manipulateur (30, 40, 50, 60, 70) est configuré pour fixer la pluralité de sections à la plate-forme ;
dans lequel chaque section comprend au moins un toron (100) ;
et dans lequel la fabrication de la pluralité de sections comprend l'utilisation des informations de fabrication.

2. Système selon la revendication 1, dans lequel le manipulateur (30, 50, 70) est configuré pour positionner une première section (84) de la pluralité de sections sur la plate-forme, et dans lequel le manipulateur est configuré pour aligner les une ou plusieurs sections (82) par rapport à la première section.

3. Système selon la revendication 1 ou 2, dans lequel le manipulateur (30, 50, 60, 70) est configuré pour fixer la pluralité de sections à la plate-forme de sorte qu'elles puissent ensuite être libérées de la plate-forme.

4. Système selon l'une des revendications 2 à 3, dans lequel la fixation de la pluralité de sections à la plate-forme par le manipulateur (30, 50, 60, 70) est effectuée par le biais d'un ou de plusieurs des procédés suivants : collage ; serrage ; attache ; utilisation d'aimants ; soudage MIG/MAG ; ou soudage par contact.

5. Système selon l'une des revendications 1 à 4, dans lequel l'au moins un toron d'une section comprend un premier toron (102) et comprend un second toron (104), et dans lequel, pour fabriquer la section, le ou les manipulateurs (30, 40, 70) sont configurés pour fixer un ou plusieurs torons d'interconnexion (120) au premier toron et au second toron.

6. Système selon l'une des revendications 1 à 5, dans lequel, pour fabriquer une section, le ou les manipulateurs (30, 40, 70) sont configurés pour plier l'au moins un toron de la section.

7. Système selon l'une des revendications 1 à 6, dans lequel l'au moins un toron d'une section comprend un premier toron (102) et comprend un second toron (104), et dans lequel, pour fabriquer la section, le ou les manipulateurs (30, 40, 70) sont configurés pour plier le premier toron et/ou le ou les manipulateurs sont configurés pour plier le second toron.

8. Système selon l'une des revendications 1 à 7, dans lequel l'au moins un toron d'une section comprend un premier toron (102) et comprend un second toron (104), dans lequel, pour fabriquer la section, le ou les manipulateurs sont configurés pour fixer un premier toron d'interconnexion (122) au premier toron et fixer le premier toron d'interconnexion au second toron ; dans lequel le ou les manipulateurs (30, 40, 70) sont configurés pour plier le premier toron et/ou plier le second toron ; et dans lequel le ou les manipulateurs (30, 40, 70) sont configurés pour fixer un second toron d'interconnexion (124) au premier toron et fixer le second toron d'interconnexion au second toron, de telle sorte qu'une section du premier toron entre le premier toron d'interconnexion et le second toron d'interconnexion et/ou une section du second toron entre le premier toron d'interconnexion et le second toron d'interconnexion est pliée, dans lequel le pliage et la fixation comprennent l'utilisation des informations de fabrication.

9. Système selon l'une des revendications 6 à 8, dans lequel le système comprend une plate-forme de stabilisation (130), et dans lequel, pour fabriquer une section, le ou les manipulateurs (30, 40, 70) sont configurés pour plier l'au moins un toron de la section lorsqu'au moins une partie de l'au moins un toron est en contact avec la plate-forme de stabilisation de telle sorte que la section soit conforme à un plan de surface de la plate-forme de stabilisation.

10. Système selon la revendication 9, dans lequel l'au moins un toron d'une section comprend un premier toron (102) et comprend un second toron (104), dans lequel, après que le ou les manipulateurs (30, 40, 70) ont plié le premier toron et/ou plié le second toron, le ou les manipulateurs sont configurés pour aligner le premier toron par rapport au second toron, dans lequel l'alignement comprend un mouvement et/ou un pliage supplémentaire du premier toron et/ou l'alignement comprend un mouvement et/ou un pliage supplémentaire du second toron, et dans lequel l'alignement comprend l'utilisation des informations de fabrication.

11. Système selon la revendication 10, dans lequel l'alignement comprend un alignement d'une pluralité de segments du premier toron par rapport à une pluralité de segments du second toron, et dans lequel, après qu'un segment du premier toron est aligné par rapport à un segment du second toron, le segment du premier toron est fixé au segment du second toron avec un toron d'interconnexion (120).

12. Système selon la revendication 11, dans lequel le ou les manipulateurs (30, 40, 70) sont configurés pour fixer le toron d'interconnexion au segment du premier toron et au segment du second toron.

13. Système selon l'une des revendications 7 à 12, dans lequel l'au moins un toron d'une section comprend un premier toron et comprend un second toron, et dans lequel le ou les manipulateurs (30, 40, 70) sont configurés pour plier le premier toron et/ou plier le second toron lorsqu'une extrémité du premier toron est fixée par rapport à une extrémité du second toron.

14. Système selon l'une des revendications 1 à 13, dans lequel le manipulateur est configuré pour fixer une partie d'un toron à une partie d'un autre toron et/ou fixer une partie de toron à une autre partie du même toron, dans lequel la fixation est réalisée via : l'attache ; le soudage MIG/MAG ; ou le soudage par contact.

15. Système selon l'une des revendications 1 à 14, dans lequel les une ou plusieurs sections sont fabriquées et alignées sur la plate-forme de sorte qu'au moins une partie de l'au moins un toron pour chaque section des une ou plusieurs sections soit située au niveau ou à proximité d'au moins un point correspondant d'une pluralité de points d'intersection définis dans les informations de fabrication.

16. Système selon la revendication 15, dans lequel l'au moins un point de la pluralité de points d'intersection définis dans les informations de fabrication est utilisable pour l'alignement et/ou la fixation d'un toron d'alimentation (190) à la structure principale de bâtiment formée à partir de la pluralité de sections.

17. Système selon l'une des revendications précédentes, dans lequel un premier interacteur de toron (210) comprend une première partie (212) et une seconde partie (214) et un second interacteur de toron comprend une première partie (222) et une seconde partie (224), dans lequel la première partie du premier interacteur de support est configurée pour entrer en contact avec un premier côté du premier toron et la seconde partie du premier interacteur de support est configurée pour entrer en contact avec un second côté du premier toron opposé au premier côté, et dans lequel la première partie du second interacteur de support est configurée pour entrer en contact avec un premier côté du second toron et la seconde partie du second interacteur de support est configurée pour entrer en contact avec un second côté du second toron opposé au premier côté.

18. Procédé (300) de fabrication d'une structure principale de bâtiment, qui correspond à une forme complexe, formée par une série de sections, qui sont des sections 2D ou 3D, le procédé comprenant :
a) la réception (310) d'informations de fabrication par une unité de traitement; et
b) la fabrication (320) par le biais d'un manipulateur de l'au moins un manipulateur d'une pluralité de sections d'une structure principale de bâtiment ; dans lequel le manipulateur est configuré pour être commandé afin de fabriquer une section (80, 82, 84) de la structure principale de bâtiment (90) à partir d'au moins un toron (100) ; dans lequel l'au moins un toron est constitué d'un ou plusieurs fils, tiges ou bandes ; et dans lequel la commande comprend l'utilisation d'informations de fabrication et dans lequel le manipulateur comprend un premier interacteur de toron (210) ainsi qu'un second interacteur de toron (220), dans lequel le premier interacteur de toron est configuré pour soutenir, maintenir ou saisir un premier toron (102) de l'au moins un toron de la section et dans lequel le second interacteur de toron est configuré pour soutenir, maintenir ou saisir un second toron (104) de l'au moins un toron de la section, et dans lequel le premier interacteur de toron est configuré pour se déplacer par rapport au second interacteur de toron sur la base des informations de fabrication et dans lequel en particulier un manipulateur (30, 50, 70) de l'au moins un manipulateur (30, 40, 50, 60, 70) est configuré pour aligner une ou plusieurs sections (82) de la pluralité de sections sur une plate-forme (110), et dans lequel l'alignement comprend l'utilisation des informations de fabrication et dans lequel un manipulateur (30, 50, 60, 70) de l'au moins un manipulateur (30, 40, 50, 60, 70) est configuré pour fixer la pluralité de sections à la plate-forme ; dans lequel chaque section comprend au moins un toron ; dans lequel l'au moins un toron est constitué d'un ou plusieurs fils, tiges ou bandes ; et dans lequel la fabrication de la pluralité de sections comprend l'utilisation des informations de fabrication.
